(19)

**Europäisches Patentamt**
**European Patent Office**
**Office européen des brevets**

(11) **EP 4 614 967 A1**

(12) **EUROPEAN PATENT APPLICATION**
published in accordance with Art. 153(4) EPC

(43) Date of publication:
**10.09.2025 Bulletin 2025/37**

(21) Application number: **23895874.8**

(22) Date of filing: **23.05.2023**

(51) International Patent Classification (IPC):
**H04N 19/105** $^{(2014.01)}$   **H04N 19/139** $^{(2014.01)}$
**H04N 19/176** $^{(2014.01)}$

(52) Cooperative Patent Classification (CPC):
**H04N 19/105; H04N 19/139; H04N 19/176;**
**H04N 19/20; H04N 19/43**

(86) International application number:
**PCT/CN2023/095686**

(87) International publication number:
**WO 2024/113708 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.11.2022 CN 202211517674**

(71) Applicant: **Huawei Technologies Co., Ltd.**
**Shenzhen, Guangdong 518129 (CN)**

(72) Inventors:
• **FENG, Donghui**
  **Shanghai 200240 (CN)**
• **CHEN, Huanbang**
  **Shenzhen, Guangdong 518129 (CN)**
• **ZHAO, Yin**
  **Shenzhen, Guangdong 518129 (CN)**
• **SONG, Li**
  **Shanghai 200240 (CN)**

(74) Representative: **Eisenführ Speiser**
**Patentanwälte Rechtsanwälte PartGmbB**
**Johannes-Brahms-Platz 1**
**20355 Hamburg (DE)**

(54) **VIDEO PROCESSING METHOD AND APPARATUS**

(57) Embodiments of this application provide a video processing method and apparatus, and relate to the field of video encoding and decoding. The method includes: A coder side may predict motion information of a current block based on an absolute location, in a lookup table, of a block in a current video frame, thereby improving MV encoding/decoding efficiency, and further improving video coding efficiency.

S601 — Obtain a location lookup table of a current block in a video frame

S602 — Obtain motion information of the current block based on the location lookup table

S603 — Code the current block based on the motion information of the current block

FIG. 8

EP 4 614 967 A1

## Description

This application claims priority to Chinese Patent Application No. 202211517674.X, filed with the China National Intellectual Property Administration on November 30, 2022 and entitled "VIDEO PROCESSING METHOD AND APPARATUS", which is incorporated herein by reference in its entirety.

## TECHNICAL FIELD

Embodiments of this application relate to the field of video encoding and decoding, and in particular, to a video processing method and apparatus.

## BACKGROUND

A digital video function may be applied to various apparatuses, including a digital television, a digital live broadcast system, a wireless broadcast system, a personal digital assistant (personal digital assistant, PDA), a laptop computer or a desktop computer, a tablet computer, an e-book reader, a digital camera, a digital recording apparatus, a digital media player, a video game apparatus, a video game console, a cellular or satellite radio telephone (referred to as a "smartphone"), a video conference apparatus, a video streaming apparatus, and the like. A digital video apparatus implements video compression technologies, such as video compression technologies described in MPEG-2, MPEG-4, ITU-T H.263, and ITU-T H.264/MPEG-4 Part 10 advanced video coding (advanced video coding, AVC), a video coding standard H.265/high efficiency video coding (high efficiency video coding, HEVC) standard, and extended standards of such standards. The video apparatus can send, receive, encode, decode, and/or store digital video information more efficiently by implementing such video compression technologies.

In the video compression technology, spatial (intra) prediction and/or temporal (inter) prediction are/is performed to reduce or remove inherent redundancy in video sequences. In block-based video coding, a video slice (that is, a video frame or a part of a video frame) may be split into picture blocks, and the picture block may also be referred to as a tree block, a coding unit (coding unit, CU), and/or a coding node. A picture block in a to-be-intra-coded (I) slice of a picture is coded through spatial prediction of a reference sample in a neighboring block in the same picture. A picture block in a to-be-inter-coded (P or B) slice of a picture may be coded through spatial prediction of a reference sample in a neighboring block in the same picture or temporal prediction of a reference sample in another reference picture. The picture may be referred to as a frame, and the reference picture may be referred to as a reference frame. An existing video coding method has low coding efficiency.

## SUMMARY

To resolve the foregoing technical problem, this application provides a video processing method and apparatus. In the method, a coder side may predict motion information of a current block based on an absolute location, in a lookup table, of a block in a current video frame, thereby improving MV encoding/decoding efficiency, and further improving video coding efficiency.

According to a first aspect, this application provides a video processing method. The method may be applied to an encoder side, and may also be applied to a decoder side. The encoder side or the decoder side may be referred to as a coder side. The method may include: obtaining a lookup table of a current block in a current video frame, where the lookup table includes at least one candidate location, and the candidate location is a location that is in the current video frame and that is relative to a sample at an upper left corner of the current video frame; obtaining motion information of the current block based on the lookup table; and coding (encoding or decoding) the current block based on the motion information.

For example, the candidate location is an absolute location of a block in the current video frame, and the absolute location may be represented as a location that is in the video frame and that is relative to a sample at an upper left corner of the video frame.

For example, the motion information may include at least one of reference block information and a motion vector (MV).

For example, the reference block information may include at least one of unidirectional or bidirectional prediction information, a reference block list, and a reference block index corresponding to the reference block list.

In this way, the coder side in this application may predict the motion information of the current block based on the absolute location, in the lookup table, of the block in the current video frame, to reduce coding complexity of the motion information, thereby improving MV encoding/decoding efficiency and further improving video coding efficiency.

According to the first aspect, the current video frame may include text content, where the text content is content including a character and is different from a natural picture.

In this way, when the video includes the text content, the motion information of the current block may be predicted based on the lookup table. This can help predict motion information of the character, and improve coding efficiency of an MV of a block of a repeated character.

According to any one of the first aspect or the foregoing implementations of the first aspect, the candidate location includes a location of a repeatedly appearing block in the current video frame.

For example, a word "秦 (Qin, a Chinese character)" appears for a large quantity of times in a video frame, and a location of a block of the word "秦 (Qin)" is written into the lookup table. In this case, when a next word "秦 (Qin)" is encoded or decoded, an MVP of the 2nd word "秦 (Qin)" may be obtained based on the location of the word "秦 (Qin)" in the lookup table, so that the MVP is more accurate, and an MVD is smaller. This improves MV coding efficiency.

There may be a repeated block (which may be blocks with repeated characters, or may be a repeated picture block) in the video frame. The coder side may add an absolute location of the repeated block in the video frame to the lookup table, to improve prediction efficiency and coding efficiency of an MV of the repeatedly appearing block in the video frame.

According to any one of the first aspect or the foregoing implementations of the first aspect, the candidate location includes a location of a coded block in the current video frame and/or a location of a reference block of the coded block.

The coder side may use the location of the coded block (the location is also an absolute location) and/or the location of the reference block of the coded block (which is also referred to as a reference location), where the reference location is an absolute location of a block to which an MV of the coded block points in a corresponding video frame. In this way, when the motion information of the current block is predicted based on the lookup table, location information of the coded block may be referred to, so that motion information of the repeatedly appearing block can be accurately predicted, to reduce a quantity of coding bits of the motion information of the block, and improve MV coding efficiency.

According to any one of the first aspect or the foregoing implementations of the first aspect, the candidate location includes a location at which the repeatedly appearing block in the current video frame appears for the first time.

The coder side may write a location at which a repeatedly appearing character or picture block appears in the current video frame for the first time (which is also an absolute location) into the lookup table as a candidate location, so that when coding the character or picture block that appears again in the video frame, the coder side may refer to the location at which the character or picture block appears in the lookup table for the first time to predict a motion vector of the character or picture block that appears again. In this way, a location of a block that is easily referred to for a plurality of times may be stored in the lookup table, to improve MV prediction efficiency.

According to any one of the first aspect or the foregoing implementations of the first aspect, the obtaining a lookup table of a current block in a current video frame includes: selecting, based on motion information of at least one coded block in the current video frame from a location corresponding to the at least one coded block, a candidate location that is to be added to the lookup table, to update the lookup table, where the location corresponding to the at least one coded block includes a location of the coded block in the current video frame or a location of a reference block of the coded block in the current video frame; and obtaining an updated lookup table.

In an example a1, when the encoder side encodes a block based on actual motion information of the to-be-encoded block (for example, in an AMVP mode), after encoding the block, the encoder side may add location information of a block (for example, coordinates (x, y) of an absolute location of the block in a current video frame) to a location lookup table.

In an example b1, when a character that appears for the first time in repeated characters in a video frame is encoded in an AMVP mode, an MVP determined from an MVP of a neighborhood is greatly different from an actual MV of the character, and an MVD is large. Therefore, when a character at a character start location in the video frame is encoded, a large quantity of bits are consumed for motion information (for example, an MV) of a block of the character.

In an example c1, when the encoder side determines that an absolute value of a horizontal component and/or an absolute value of a vertical component of an MVD of an encoded block are/is greater than a second preset threshold, it indicates that a large quantity of bits are consumed when the encoder side encodes the MVD of the block, and it may also indicate that the encoded block is likely to be a block of a character that appears for the first time in a video frame. In this case, the encoder side may add location information (x, y) of the encoded block in the video frame to a location lookup table.

In an example d1, when the encoder side determines that a sum of an absolute value of a horizontal component and an absolute value of a vertical component of an MVD of an encoded block is greater than a third preset threshold, it indicates that a large quantity of bits are consumed when the encoder side encodes the MVD of the block, and it may also indicate that the encoded block is likely to be a block of a character that appears for the first time in a video frame. In this case, the encoder side may add location information (x, y) of the encoded block in the video frame to a location lookup table.

In an example f1, the encoder side may further add a reference location of an encoded block to a location lookup table.

According to any one of the first aspect or the foregoing implementations of the first aspect, the obtaining a lookup table of a current block in a current video frame includes: obtaining a global lookup table of at least one region in the current video frame, where the at least one region includes a first region, the first region includes the current block, the global lookup table includes at least one first location, and the at least one first location is a location that is in the region and that is relative to the sample at the upper left corner of the current video frame; and obtaining the lookup table of the current block in the current video frame based on the global lookup table of the at least one region, where the first location includes the candidate location in the lookup table.

The encoder side may generate a global lookup table for each of the at least one region in the current video frame, and encode the global lookup table of the region into a bitstream for transmission to the decoder side.

A global lookup table of a region may include at least one first location. The first location is also an absolute location that is in the region and that is in the current video frame. The first location may be a location that is in the region and that is relative to the sample at the upper left corner of the current video frame. The global lookup table may include an absolute location of a block in the region.

In an example, when obtaining the lookup table of the current block based on the global lookup table of the at least one region, the coder side may use the global lookup table of the first region including the current block as the lookup table of the current block. Therefore, each first location in the global lookup table of the first region is a candidate location in the lookup table of the current block.

In another example, when obtaining the lookup table of the current block based on the global lookup table of the at least one region, the coder side may delete a part of the first location (which is an absolute location of an unencoded block in the current video frame) in the global lookup table of the first region including the current block, and use a global lookup table that is of the first region and that is obtained through the deletion operation as the lookup table of the current block. Therefore, each first location in the global lookup table that is of the first region and that is obtained through the deletion operation is a candidate location in the lookup table of the current block.

In this way, data in the generated lookup table is more accurate, to help accurately predict the MV and reduce a quantity of coding bits of the MV.

According to any one of the first aspect or the foregoing implementations of the first aspect, a global lookup table of each of the at least one region is a lookup table generated based on a frequency of repeated appearing of a block in the region before the block in the region is coded.

For example, the first location may be an absolute location of a block of a repeated character or a repeated picture block in the current video frame.

The absolute location represents a location relative to a pixel at the upper left corner of the current video frame.

According to any one of the first aspect or the foregoing implementations of the first aspect, the obtaining motion information of the current block based on the lookup table includes: determining at least one target candidate location based on the lookup table, where the candidate location in the lookup table includes the target candidate location; determining at least one motion vector predictor MVP (for example, at least one MVP candidate) of the current block based on the at least one target candidate location; and obtaining the motion information of the current block based on the at least one MVP.

According to any one of the first aspect or the foregoing implementations of the first aspect, there is one target candidate location, and the determining at least one target candidate location based on the lookup table includes: determining, based on the lookup table and an index of the candidate location, the target candidate location that is in the lookup table and that corresponds to the index.

On the encoder side, an index of a candidate location (that is, a target candidate location) corresponding to an MV with lowest coding costs in the lookup table may be determined based on the lookup table, and the index is encoded into the bitstream for transmission to the decoder side.

The decoder side may obtain the index of the target candidate location from the bitstream, to obtain, from a lookup table on the decoder side, the target candidate location indicated by the index.

According to any one of the first aspect or the foregoing implementations of the first aspect, the determining at least one target candidate location based on the lookup table includes: selecting a predetermined quantity of candidate locations from the lookup table as target candidate locations, where the predetermined quantity is an integer greater than zero.

When predicting the motion information of the current block based on the lookup table, the coder side may select a specific quantity of candidate locations from the lookup table, and convert the candidate locations into candidate MVPs, to obtain the motion information of the current block based on the predetermined quantity of candidate MVPs.

According to any one of the first aspect or the foregoing implementations of the first aspect, the obtaining the motion information of the current block based on the at least one MVP includes: constructing an MVP candidate list of the current block based on the at least one MVP; and obtaining the motion information of the current block based on the MVP candidate list.

For example, when the current block is coded in the AMVP mode, the MVP candidate list may include an MVP candidate in an AMVP candidate list, and may further include an MVP (which is also an MVP candidate) obtained by converting the predetermined quantity of candidate locations.

For example, when the current block is coded in a merge mode, the MVP candidate list may include a merge candidate (which is also an MVP) in a merge candidate list, and may further include an MVP (which is also an MVP candidate) obtained by converting the predetermined quantity of candidate locations.

For example, the coder side may obtain the motion information of the current block based on the MVP candidate list in the AMVP mode or the merge mode.

According to any one of the first aspect or the foregoing implementations of the first aspect, the predetermined quantity is related to at least one of the following: a coding mode of the motion information of the current block, a size of the current block, and a shape of the current block.

According to a second aspect, this application provides a video processing apparatus. The apparatus includes:

a first obtaining module, configured to obtain a lookup table of a current block in a current video frame, where the lookup table includes at least one candidate location, and the candidate location is a location that is in the current video frame and that is relative to a sample at an upper left corner of the current video frame;
a second obtaining module, configured to obtain motion information of the current block based on the lookup table; and
a coding module, configured to code the current block based on the motion information.

According to the second aspect, the current video frame includes text content.

According to any one of the second aspect or the foregoing implementations of the second aspect, the candidate location includes a location of a repeatedly appearing block in the current video frame.

According to any one of the second aspect or the foregoing implementations of the second aspect, the candidate location includes a location of a coded block in the current video frame and/or a location of a reference block of the coded block.

According to any one of the second aspect or the foregoing implementations of the second aspect, the candidate location includes a location at which the repeatedly appearing block in the current video frame appears for the first time.

According to any one of the second aspect or the foregoing implementations of the second aspect, the first obtaining module is specifically configured to: select, based on motion information of at least one coded block in the current video frame from a location corresponding to the at least one coded block, a candidate location that is to be added to the lookup table, to update the lookup table, where the location corresponding to the at least one coded block includes a location of the coded block in the current video frame or a location of a reference block of the coded block in the current video frame; and obtain an updated lookup table.

According to any one of the second aspect or the foregoing implementations of the second aspect, the first obtaining module is specifically configured to: obtain a global lookup table of at least one region in the current video frame, where the at least one region includes a first region, the first region includes the current block, the global lookup table includes at least one first location, and the at least one first location is a location that is in the region and that is relative to the sample at the upper left corner of the current video frame; and obtain the lookup table of the current block in the current video frame based on the global lookup table of the at least one region, where the first location includes the candidate location in the lookup table.

According to any one of the second aspect or the foregoing implementations of the second aspect, a global lookup table of each of the at least one region is a lookup table generated based on a frequency of repeated appearing of a block in the region before the block in the region is coded.

According to any one of the second aspect or the foregoing implementations of the second aspect, the second obtaining module is specifically configured to: determine at least one target candidate location based on the lookup table, where the candidate location in the lookup table includes the target candidate location; determine at least one motion vector predictor MVP of the current block based on the at least one target candidate location; and obtain the motion information of the current block based on the at least one MVP.

According to any one of the second aspect or the foregoing implementations of the second aspect, the second obtaining module is specifically configured to determine, based on the lookup table and an index of the candidate location, the target candidate location that is in the lookup table and that corresponds to the index, where there is one target candidate location.

According to any one of the second aspect or the foregoing implementations of the second aspect, the second obtaining module is specifically configured to select a predetermined quantity of candidate locations from the lookup table as target candidate locations, where the predetermined quantity is an integer greater than zero.

According to any one of the second aspect or the foregoing implementations of the second aspect, the second obtaining module is specifically configured to: construct an MVP candidate list of the current block based on the at least one MVP; and obtain the motion information of the current block based on the MVP candidate list.

According to any one of the second aspect or the foregoing implementations of the second aspect, the predetermined quantity is related to at least one of the following: a coding mode of the motion information of the current block, a size of the current block, and a shape of the current block.

Effect of the video processing apparatus in the implementations is similar to effect of the video processing method in the implementations, and details are not described herein again.

According to a third aspect, this application provides an encoder that may be configured to implement the method in any one of the foregoing implementations.

According to the third aspect, the encoder is further configured to encode a global lookup table into a bitstream of a current video frame.

According to any one of the third aspect or the foregoing implementations of the third aspect, the encoder is further configured to encode an index of a target candidate location in the lookup table into the bitstream of the current video frame.

According to any one of the third aspect or the foregoing implementations of the third aspect, the encoder is further configured to encode a predetermined quantity into the bitstream of the current video frame.

Effect of the encoder in the implementations is similar to effect of the video processing method in the implementations, and details are not described herein again.

According to a fourth aspect, this application provides a decoder that may be configured to implement the method in any one of the foregoing implementations.

According to a fourth aspect, the decoder is further configured to obtain a global lookup table of at least one region in a current video frame from a bitstream.

According to any one of the fourth aspect or the foregoing implementations of the fourth aspect, the encoder is further configured to obtain an index of a target candidate location from the bitstream.

According to any one of the fourth aspect or the foregoing implementations of the fourth aspect, the decoder is further configured to obtain a predetermined quantity from the bitstream.

Effect of the decoder in the implementations is similar to effect of the video processing method in the implementations, and details are not described herein again.

According to a fifth aspect, this application provides a video processing apparatus. The video processing apparatus includes one or more interface circuits and one or more processors, where the interface circuit is configured to: receive a signal from a memory, and send the signal to the processor, where the signal includes computer instructions stored in the memory; and when the processor executes the computer instructions, the processor may implement the method in any one of the foregoing implementations.

Effect of the video processing apparatus in this implementation is similar to effect of the video processing method in the implementations, and details are not described herein again.

According to a sixth aspect, this application provides a computer-readable storage medium. The computer-readable storage medium stores a computer program. When the computer program is run on a computer or a processor, the computer or the processor is enabled to perform the method in any one of the foregoing implementations.

Effect of the computer-readable storage medium in this implementation is similar to effect of the video processing method in the implementations, and details are not described herein again.

According to a seventh aspect, this application provides a computer program product. The computer program product includes a software program. When the software program is executed by a computer or a processor, the method in any one of the foregoing implementations is performed.

Effect of the computer program product in this implementation is similar to effect of the video processing method in the implementations, and details are not described herein again.

According to an eighth aspect, this application provides a computer-readable storage medium, where the computer-readable storage medium stores a video bitstream obtained by performing the method in any one of the foregoing implementations by one or more processors.

According to a ninth aspect, this application provides a video data encoder, where the encoder includes a memory configured to store video data in a form of a bitstream, and the encoder is configured to perform the method in any one of the foregoing implementations.

According to a tenth aspect, this application provides a video data decoder, where the decoder includes a memory configured to store video data in a form of a bitstream, and the decoder is configured to perform the method in any one of the foregoing implementations.

## BRIEF DESCRIPTION OF DRAWINGS

To describe technical solutions in embodiments of this application more clearly, the following briefly describes accompanying drawings required for describing embodiments of this application. Apparently, the accompanying drawings in the following description show merely some embodiments of this application, and a person of ordinary skill in the art may still derive other accompanying drawings from these accompanying drawings without creative efforts.

FIG. 1A is a block diagram of an example of a video encoding and decoding system according to an embodiment;

FIG. 1B is a block diagram of an example of a video coding system according to an embodiment;

FIG. 2 is a block diagram of an example structure of an encoder according to an embodiment;

FIG. 3 is a block diagram of an example structure of a decoder according to an embodiment;

FIG. 4 is a block diagram of an example of a video coding device according to an embodiment;

FIG. 5 is a block diagram of another example of an encoding apparatus or a decoding apparatus according to an embodiment;

FIG. 6 is a diagram of a frame according to an embodiment;

FIG. 7 is a diagram of a processing process of a video transmission system according to an embodiment;

FIG. 8 is a diagram of a video coding process according to an embodiment;

FIG. 9a is a diagram of an MV prediction process according to an embodiment;

FIG. 9b is a diagram of an MV prediction process according to an embodiment;

FIG. 10 is a block diagram of an example structure of a content supply system 3100 for implementing a content delivery service; and

FIG. 11 is a block diagram of an example structure of a terminal device.

## DESCRIPTION OF EMBODIMENTS

The following clearly describes the technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for associated objects and indicates that three relationships may exist. For example, A and/or B may indicate the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units are two or more processing units, and a plurality of systems are two or more systems.

The following describes embodiments of the present invention with reference to accompanying drawings in embodiments of the present invention. In the following description, reference is made to the accompanying drawings that form a part of the present invention and show, by way of illustration, specific aspects of examples of embodiments of the present invention or specific aspects in which embodiments of the present invention may be used. It should be understood that embodiments of the present invention may be used in another aspect and may include structural or logical changes not depicted in the accompanying drawings. The following detailed description, therefore, is not to be taken in a limiting sense, and the scope of the present invention is defined by the appended claims. For example, it should be understood that the disclosure with reference to a described method may also be applied to a corresponding device or system for performing the method, and vice versa. For example, if one or more specific method steps are described, a corresponding device may include one or more units such as functional units for performing the described one or more method steps (for example, one unit performing the one or more steps, or a plurality of units, each of which performs one or more of the plurality of steps), even if such one or more units are not explicitly described or illustrated in the accompanying drawings. Correspondingly, for example, if a particular apparatus is described based on one or more units such as a functional unit, a corresponding method may include one or more steps for performing a function of the one or more units (for example, one step for performing a function of the one or more units, or a plurality of steps, each of which performs a function of one or more of the plurality of units), even if the one or more steps are not explicitly described or illustrated in the accompanying drawings. Further, it should be understood that the features of various example embodiments and/or aspects described herein may be combined with each other, unless specifically noted otherwise.

The technical solutions in embodiments of the present invention may not only be applied to an existing video coding standard (for example, the H.264 standard and the HEVC standard), but also be applied to a future video coding standard (for example, H.267 and AV2). Terms used in implementation parts of the present invention are merely intended to explain specific embodiments of the present invention, and are not intended to limit the present invention. The following first briefly describes some concepts that may be used in embodiments of the present invention.

Video coding typically indicates processing of a sequence of pictures that form a video or a video sequence. In the field of video coding, the term "frame (frame)" or "picture (image/picture)" may be used as a synonym. Video coding used in this specification indicates video encoding or video decoding. Video encoding is performed at a source side, and typically includes processing (for example, by compression) original video pictures, to reduce an amount of data required for representing the video pictures for more efficient storage and/or transmission. Video decoding is performed at a destination side, and typically includes inverse processing in comparison with processing of an encoder, to reconstruct the video pictures. "Coding" of a video picture in embodiments may be understood as "encoding" or "decoding" of a video sequence. A combination of an encoding part and a decoding part is also referred to as a codec (encoding and decoding).

The video sequence includes a series of pictures. The picture is further partitioned into slices, and each slice is further partitioned into blocks. In video coding, each block is coded. In some new video coding standards, the concept "block" is further extended. For example, in the H.264 standard, there is a macroblock (macroblock, MB), and the macroblock may be further partitioned into a plurality of prediction blocks (or partitions) that may be used for prediction coding. In the high efficiency video coding (high efficiency video coding, HEVC) standard, basic concepts such as a coding unit (coding unit, CU), a prediction unit (prediction unit, PU), and a transform unit (transform unit, TU) are used. A plurality of types of block units are obtained through function division, and these units are described based on a new tree-based structure. For example, the CU may be partitioned into smaller CUs based on a quad-tree, and each smaller CU may be further partitioned, to form a quad-tree structure. The CU is a basic unit for partitioning and coding a coding picture. The PU and the TU also have a similar tree structure. The PU may correspond to a prediction block, and is a basic unit for prediction coding. The CU is further partitioned into a plurality of PUs in a partitioning manner. The TU may correspond to a transform block, and is a basic unit for transforming a prediction residual. In essence, all of the CU, the PU, and the TU are concepts of blocks (or picture blocks).

For example, in HEVC, a CTU is partitioned into a plurality of CUs based on a quad-tree structure represented as a coding tree. A decision whether to code a picture region through inter (temporal) or intra (spatial) prediction is made at the CU level. Each CU may be further partitioned into one, two, or four PUs based on a PU partitioning type. In one PU, a same prediction process is performed, and related information is sent to a decoder on a PU basis. After a residual block is obtained by performing the prediction process, the CU may be partitioned into TUs based on the PU partitioning type and another quad-tree structure similar to the coding tree used for the CU. In latest development of video compression technologies, a quad-tree and binary-tree (Quadtree and binary tree, QTBT) partition frame is used to partition a coding block. In a QTBT block structure, a CU may have a square or rectangular shape.

In this specification, for ease of description and understanding, a to-be-coded picture block in a current coding picture may be referred to as a current block. For example, in encoding, the current block is a block that is currently being encoded; and in decoding, the current block is a block that is currently being decoded. A decoded picture block that is in a reference picture and that is used to predict the current block is referred to as a reference block. In other words, the reference block is a block that provides a reference signal for the current block, where the reference signal indicates a pixel value in a picture block. A block that is in the reference picture and that provides a prediction signal for the current block may be referred to as a prediction block, where the prediction signal indicates a pixel value, a sample value, or a sample signal in the prediction block. For example, an optimal reference block is found after a plurality of reference blocks are traversed, the optimal reference block provides prediction for the current block, and this block is referred to as a prediction block.

In a case of lossless video coding, the original video picture can be reconstructed. This means that a reconstructed video picture has same quality as the original video picture (it is assumed there is no transmission loss or other data loss during storage or transmission). In a case of lossy video coding, further compression is performed in a manner such as quantization, to reduce an amount of data required for representing the video picture, and the video picture cannot be completely reconstructed on a decoder side. This means that quality of the reconstructed video picture is lower or worse than quality of the original video picture.

Several video coding standards starting from H.261 are used for "lossy hybrid video coding" (in other words, spatial and temporal prediction in a sample domain is combined with 2D transform coding for applying quantization in a transform domain). Each picture of a video sequence is usually partitioned into a set of non-overlapping blocks, and coding is usually performed at a block level. In other words, on an encoder side, a video is usually processed, that is, encoded, at a block (or video block) level. For example, a prediction block is generated through spatial (intra) prediction and temporal (inter) prediction, the prediction block is subtracted from a current block (a block that is currently being processed or to be processed) to obtain a residual block, and the residual block is transformed in the transform domain and quantized to reduce an amount of data to be sent (compressed). On the decoder side, inverse processing in comparison with processing of the encoder is performed on an encoded block or a compressed block to reconstruct the current block for representation. Furthermore, the encoder performs processing based on a decoder processing loop, so that the encoder and the decoder generate same prediction (for example, intra prediction and inter prediction) and/or reconstruction, for processing, that is, coding subsequent blocks.

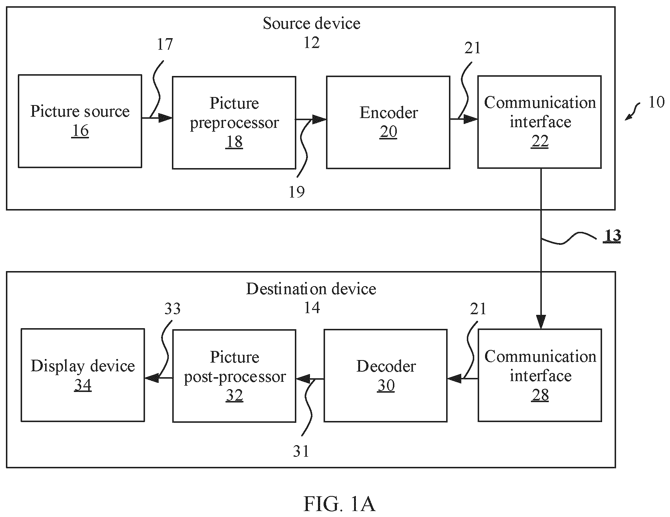

The following describes a system architecture applied to embodiments of the present invention. FIG. 1A is a block diagram of an example of a video encoding and decoding system according to an embodiment. As shown in FIG. 1A, the video encoding and decoding system 10 may include a source device 12 and a destination device 14. The source device 12 generates encoded video data. Therefore, the source device 12 may be referred to as a video encoding apparatus. The destination device 14 may decode the encoded video data generated by the source device 12. Therefore, the destination device 14 may be referred to as a video decoding apparatus. The source device 12, the destination device 14, or embodiments of both the source device 12 and the destination device 14 may include one or more processors and a memory coupled to the processor. The memory may include but is not limited to a random access memory (random access memory, RAM), a read-only memory (read-only memory, ROM), an electrically erasable programmable read-only memory (electrically erasable programmable read-only memory, EEPROM), a flash memory, or any other medium that may be used to store desired program code in a form of programmable instructions or a computer-accessible data structure, as described in this specification. The source device 12 and the destination device 14 may include various apparatuses, including a desktop computer, a mobile computing apparatus, a notebook computer (for example, a laptop computer), a tablet computer, a set-top box, a telephone handset (a "smartphone", and the like), a television, a camera, a display apparatus, a digital media player, a video game console, a vehicle-mounted computer, a wireless communication device, and the like.

Although FIG. 1A depicts the source device 12 and the destination device 14 as separate devices, an embodiment may alternatively include both the source device 12 and the destination device 14, or functions of both the source device 12 and the destination device 14, namely, the source device 12 or a corresponding function and the destination device 14 or a corresponding function. In such embodiments, the source device 12 or the corresponding function and the destination device 14 or the corresponding function may be implemented by same hardware and/or software, separate hardware and/or software, or any combination thereof.

A communication connection between the source device 12 and the destination device 14 may be performed through a link 13, and the destination device 14 may receive the encoded video data from the source device 12 through the link 13. The link 13 may include one or more media or apparatuses capable of moving the encoded video data from the source device 12 to the destination device 14. In an example, the link 13 may include one or more communication media that enable the source device 12 to directly send the encoded video data to the destination device 14 in real time. In this example, the source device 12 may modulate the encoded video data according to a communication standard (for example, a wireless communication protocol), and may send modulated video data to the destination device 14. The one or more communication media may include a wireless communication medium and/or a wired communication medium, for example, a radio frequency (radio frequency, RF) spectrum or one or more physical transmission lines. The one or more communication media may form a part of a packet-based network. For example, the packet-based network is a local area network, a wide area network, or a global network (for example, the internet). The one or more communication media may include a router, a switch, a base station, or another device that facilitates communication from the source device 12 to the destination device 14.

The source device 12 includes an encoder 20. In an embodiment, the source device 12 may further include a picture source 16, a picture preprocessor 18, and a communication interface 22. In an embodiment, the encoder 20, the picture source 16, the picture preprocessor 18, and the communication interface 22 may be hardware components in the source device 12, or may be software programs in the source device 12. The separate description is as follows:

The picture source 16 may include or may be any type of picture capture device configured to, for example, capture a real-world picture, and/or any type of device configured to generate a picture or comment (for screen content encoding, a part of text on a screen is also considered as a part of a to-be-encoded picture), for example, a computer graphics processor configured to generate a computer animation picture, or any type of device configured to obtain and/or provide a real-world picture or a computer animation picture (for example, screen content or a virtual reality (VR) picture), and/or any combination thereof (for example, an augmented reality (augmented reality, AR) picture). The picture source 16 may be a camera lens configured to capture a picture, or a memory configured to store the picture. The picture source 16 may further include any type of (internal or external) interface for storing a previously captured or generated picture and/or obtaining or receiving a picture. For example, when the picture source 16 is a camera lens, the picture source 16 may be a local camera lens or an integrated camera lens integrated in the source device. When the picture source 16 is a memory, the picture source 16 may be a local memory, for example, an integrated memory integrated in the source device. For example, when the picture source 16 includes an interface, the interface may be an external interface for receiving a picture from an external video source. For example, the external video source is an external picture capture device like a camera lens, an external memory, or an external picture generation device. For example, the external picture generation device is an external computer graphics processor, a computer, or a server. The interface may be any type of interface, for example, a wired or wireless interface or an optical interface according to any proprietary or standardized interface protocol.

A picture may be considered as a two-dimensional array or matrix of pixels (picture elements). A pixel in an array may also be referred to as a sample (sample). Quantities of samples in horizontal and vertical directions (or axes) of the array or the picture define a size and/or resolution of the picture. Generally, three color components are used to represent a color. The picture may be represented as or include three sample arrays. For example, in an RBG format or a color space, a picture includes corresponding red, green, and blue sample arrays. However, in video coding, each pixel is usually represented in a luminance/chrominance format or a color space. For example, a picture in a YUV format includes a luminance component represented by Y (or represented by L sometimes) and two chrominance components represented by U and V. The luminance (luma) component Y represents luminance or grayscale intensity (for example, both are the same in a grayscale picture), and two chrominance (chroma) components U and V represent a chrominance color information component or a color information component. Accordingly, a picture in a YUV format includes a luminance sample array of luminance sample values (Y) and two chrominance sample arrays of chrominance values (U and V). A picture in an RGB format may be transformed or converted into a picture in a YUV format and vice versa. This process is also referred to as color conversion or transform. If a picture is monochrome, the picture may include only a luminance sample array. In an embodiment, the picture sent by the picture source 16 to the picture processor may also be referred to as original picture data 17.

The picture preprocessor 18 is configured to receive the original picture data 17 and process the original picture data 17, to obtain a preprocessed picture 19 or preprocessed picture data 19. Preprocessing performed by the picture preprocessor 18 may, for example, include trimming, color format conversion (for example, conversion from an RGB format to a YUV format), color correction, or de-noising.

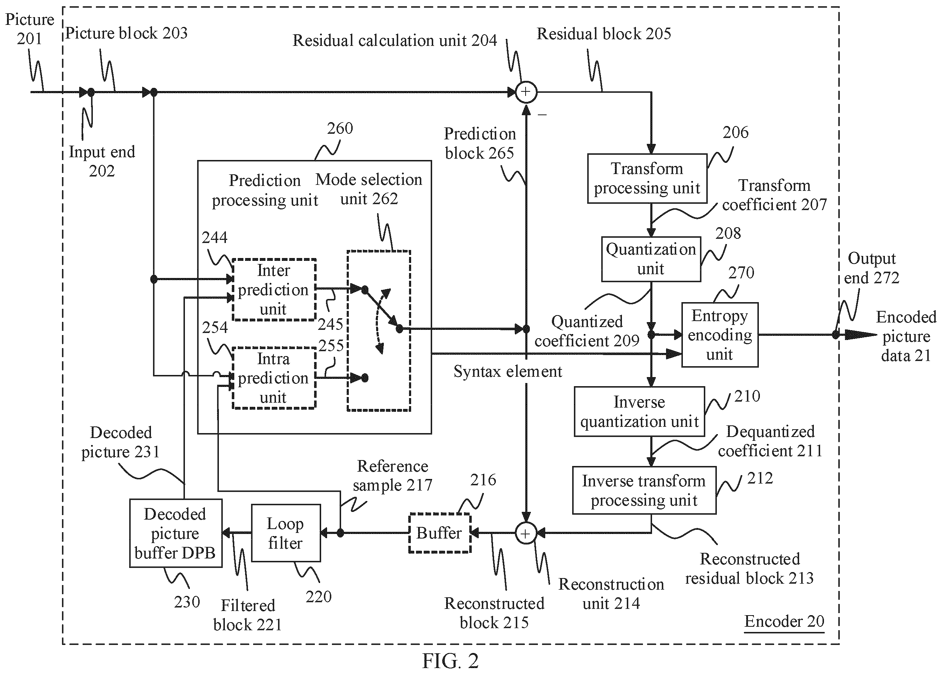

The encoder 20 (also referred to as a video encoder 20) is configured to receive the preprocessed picture data 19 and process the preprocessed picture data 19 in a related prediction mode (for example, the prediction mode in embodiments of the present invention), to provide encoded picture data 21 (a structure of the encoder 20 is further described in detail below based on FIG. 2, FIG. 4, or FIG. 5). In some embodiments, the encoder 20 may be configured to perform various embodiments described below, to implement an encoder-side application of a motion vector (MV) prediction method described in the present invention.

The communication interface 22 may be configured to receive the encoded picture data 21 and send the encoded picture data 21 to the destination device 14 or any other device (for example, a memory) through the link 13 for storage or direct reconstruction. The other device may be any device for decoding or storage. For example, the communication interface 22 may be configured to encapsulate the encoded picture data 21 into an appropriate format, for example, a data packet, for sending over the link 13.

The destination device 14 includes a decoder 30. In an embodiment, the destination device 14 may further include a communication interface 28, a picture post-processor 32, and a display device 34. The separate description is as follows:

The communication interface 28 may be configured to receive the encoded picture data 21 from the source device 12 or any other source. Any other source is a storage device or the like, and the storage device is an encoded picture data storage device or the like. The communication interface 28 may be configured to send or receive the encoded picture data 21 through the link 13 between the source device 12 and the destination device 14 or through any type of network. The link 13 is a direct wired or wireless connection or the like, and any type of network is a wired or wireless network or any combination thereof, or any type of private or public network or any combination thereof. For example, the communication interface 28 may be configured to decapsulate the data packet sent through the communication interface 22, to obtain the encoded picture data 21.

Both the communication interface 28 and the communication interface 22 may be used as unidirectional communication interfaces or bidirectional communication interfaces, for example, may be configured to send and receive messages to establish a connection and acknowledge and exchange any other information related to a communication link and/or data transmission (for example, encoded picture data transmission).

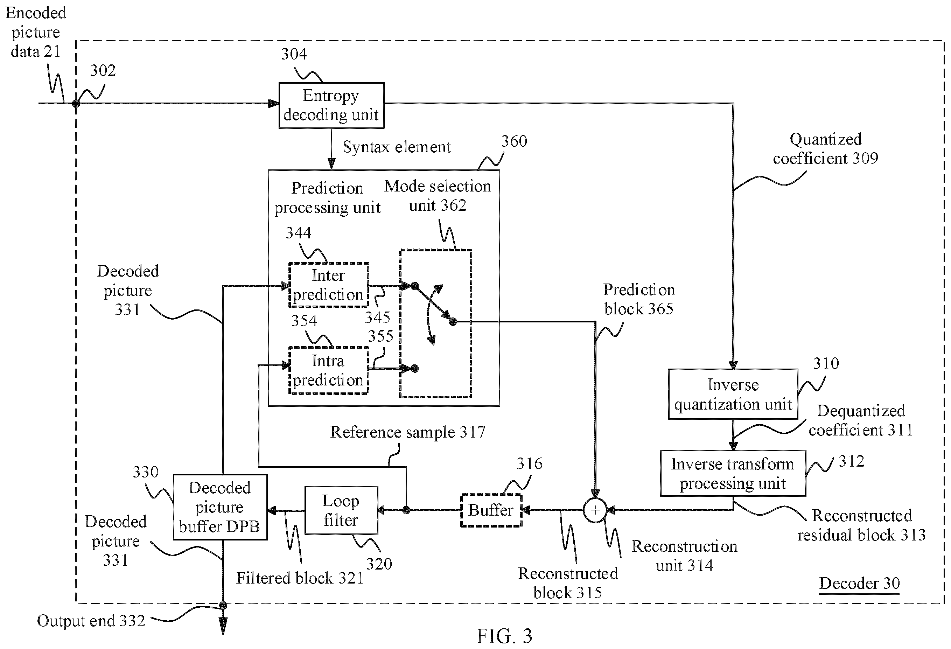

The decoder 30 (also referred to as a video decoder 30) is configured to receive the encoded picture data 21 and provide decoded picture data 331 or a decoded picture 331 (a structure of the decoder 30 is further described in detail below based on FIG. 3, FIG. 4, or FIG. 5). In some embodiments, the decoder 30 may be configured to perform various embodiments described below, to implement a decoder-side application of a video processing method described in the present invention.

The picture post-processor 32 is configured to perform post-processing on the decoded picture data 331 (also referred to as reconstructed picture data), to obtain post-processed picture data 33. The post-processing performed by the picture post-processor 32 may include color format conversion (for example, conversion from the YUV format to the RGB format), color correction, trimming, resampling, or any other processing. The picture post-processor 32 may be further configured to send the post-processed picture data 33 to the display device 34.

The display device 34 is configured to receive the post-processed picture data 33 for displaying the picture, for example, to a user or viewer. The display device 34 may be or may include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCOS), a digital light processor (digital light processor, DLP), or any type of other display.

Although FIG. 1A depicts the source device 12 and the destination device 14 as separate devices, an embodiment may alternatively include both the source device 12 and the destination device 14, or functions of both the source device 12 and the destination device 14, namely, the source device 12 or a corresponding function and the destination device 14 or a corresponding function. In such embodiments, the source device 12 or the corresponding function and the destination device 14 or the corresponding function may be implemented by same hardware and/or software, separate hardware and/or software, or any combination thereof.

As will be apparent for a person skilled in the art based on the description, the existence and (exact) function division of different units or functions of the source device 12 and/or the destination device 14 shown in FIG. 1A may vary with an actual device and application. The source device 12 and the destination device 14 may include any one of various devices, including any type of handheld or stationary devices, for example, a notebook computer or a laptop computer, a mobile phone, a smartphone, a tablet computer, a camera, a desktop computer, a set-top box, a television, a camera, a vehicle-mounted device, a display device, a digital media player, a video game console, a video streaming device (such as a content service server or a content delivery server), a broadcast receiver device, or a broadcast transmitter device, and may use no or any type of operating system.

Both the encoder 20 and the decoder 30 may be implemented as any one of various appropriate circuits, for example, one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, or any combination thereof. If these technologies are implemented partially in software, a device may store instructions for the software in a suitable non-transitory computer-readable storage medium and may execute these instructions in hardware by one or more processors to perform the technologies of the present invention. Any one of the foregoing (including hardware, software, a combination of hardware and software, and the like) may be considered as one or more processors.

In some cases, the video encoding and decoding system 10 shown in FIG. 1A is merely an example, and the technology of the present invention is applicable to video coding settings (for example, video encoding or video decoding) that do not necessarily include any data communication between an encoding device and a decoding device. In other examples, data may be searched for from a local memory, streamed through a network, or the like. A video encoding device may encode data and store encoded data in the memory, and/or a video decoding device may search for data from the memory and decode the data. In some examples, encoding and decoding are performed by devices that do not communicate with each other, but simply encode data to the memory and/or search for data from the memory and decode the data.

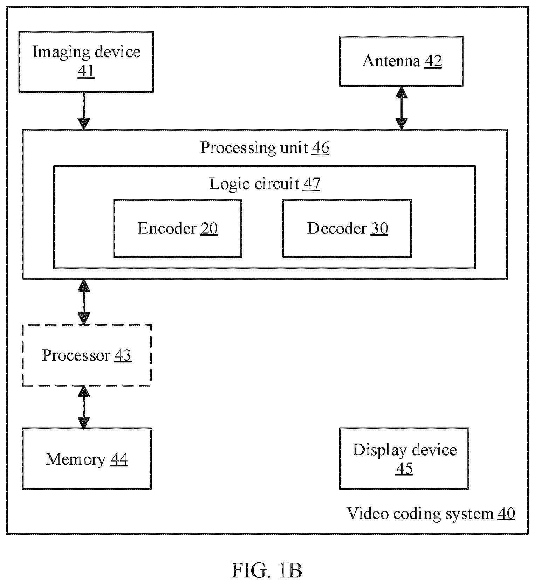

FIG. 1B is an illustrative diagram of an example of a video coding system according to an embodiment. As shown in FIG. 1B, according to an embodiment, the video coding system 40 includes the encoder 20 in FIG. 2 and/or the decoder 30 in FIG. 3. The video coding system 40 can implement a combination of various technologies in embodiments of the present invention. In FIG. 1B, the video coding system 40 may include an imaging device 41, the encoder 20, the decoder 30 (and/or a video encoder/decoder implemented by a logic circuit 47 of a processing unit 46), an antenna 42, one or more processors 43, one or more memories 44, and/or a display device 45.

As shown in FIG. 1B, the imaging device 41, the antenna 42, the processing unit 46, the logic circuit 47, the encoder 20, the decoder 30, the processor 43, the memory 44, and/or the display device 45 can communicate with each other. As described above, although the video coding system 40 is illustrated with the encoder 20 and the decoder 30, the video coding system 40 may include only the encoder 20 or only the decoder 30 in different examples.

In some embodiments, the antenna 42 may be configured to send or receive an encoded bitstream of video data. Further, in some embodiments, the display device 45 may be configured to present the video data. In some examples, the logic circuit 47 may be implemented by the processing unit 46. The processing unit 46 may include ASIC logic, a graphics processing unit, a general-purpose processor, or the like. The video coding system 40 may further include an optional processor 43. Similarly, the optional processor 43 may include ASIC logic, a graphics processing unit, a general-purpose processor, or the like. In some embodiments, the logic circuit 47 may be implemented by hardware, for example, video coding dedicated hardware, and the processor 43 may be implemented by general-purpose software, an operating system, or the like. In addition, the memory 44 may be any type of memory, for example, a volatile memory (for example, a static random access memory (static random access memory, SRAM) or a dynamic random access memory (dynamic random access memory, DRAM)) or a nonvolatile memory (for example, a flash memory). In a non-limitative example, the memory 44 may be implemented by a cache memory. In some embodiments, the logic circuit 47 may access the memory 44 (for example, for implementation of a picture buffer). In other embodiments, the logic circuit 47 and/or the processing unit 46 may include a memory (for example, a cache) for implementation of the picture buffer or the like.

In some embodiments, the encoder 20 implemented by the logic circuit may include a picture buffer (for example, implemented by the processing unit 46 or the memory 44) and a graphics processing unit (for example, implemented by the processing unit 46). The graphics processing unit may be communicatively coupled to the picture buffer. The graphics processing unit may include the encoder 20 implemented by the logic circuit 47, to implement various modules described with reference to FIG. 2 and/or any other encoder system or subsystem described in this specification. The logic circuit may be configured to perform various operations described in this specification.

In some embodiments, the decoder 30 may be implemented in a similar manner by the logic circuit 47, to implement various modules described with reference to the decoder 30 in FIG. 3 and/or any other decoder system or subsystem described in this specification. In some embodiments, the decoder 30 implemented by the logic circuit may include a picture buffer (for example, implemented by the processing unit 46 or the memory 44) and a graphics processing unit (for example, implemented by the processing unit 46). The graphics processing unit may be communicatively coupled to the picture buffer. The graphics processing unit may include the decoder 30 implemented by the logic circuit 47, to implement various modules described with reference to FIG. 3 and/or any other decoder system or subsystem described in this specification.

In some embodiments, the antenna 42 may be configured receive an encoded bitstream of video data. As described above, the encoded bitstream may include data, an indicator, an index value, mode selection data, or the like that is related to video frame encoding and that is described in this specification, for example, data related to coding partitioning (for example, a transform coefficient or a quantized transform coefficient, an optional indicator (as described), and/or data defining the coding partitioning). The video coding system 40 may further include the decoder 30 coupled to the antenna 42, and the decoder 30 is configured to decode the encoded bitstream. The display device 45 is configured to present a video frame.

It should be understood that, in this embodiment of the present invention, for the example described with reference to the encoder 20, the decoder 30 may be configured to perform an inverse process. With regard to indicating (signaling) a syntax element, the decoder 30 may be configured to receive and parse such a syntax element and correspondingly decode related video data. In some embodiments, the encoder 20 may entropy encode the syntax element into an encoded video bitstream. In such examples, the decoder 30 may parse the syntax element and correspondingly decode the related video data.

It should be noted that the method described in embodiments of the present invention is mainly applied to an inter prediction process, and the process exists in both the encoder 20 and the decoder 30. The encoder 20 and the decoder 30 in embodiments of the present invention may be an encoder and a decoder that correspond to video standard protocols such as H.263, H.264/AVC, H.265/HEVC, H.266/VVC, MPEG-2, MPEG-4, VP8, VP9 and AV1 or next-generation video standard protocols (for example, H.267 and AV2).

FIG. 2 is a schematic/conceptual block diagram of an example of an encoder according to an embodiment. In FIG. 2, the encoder 20 includes a residual calculation unit 204, a transform processing unit 206, a quantization unit 208, an inverse quantization unit 210, an inverse transform processing unit 212, a reconstruction unit 214, a buffer 216, a loop filter unit 220, a decoded picture buffer (decoded picture buffer, DPB) 230, a prediction processing unit 260, and an entropy encoding unit 270. The prediction processing unit 260 may include an inter prediction unit 244, an intra prediction unit 254, and a mode selection unit 262. The inter prediction unit 244 may include a motion estimation unit and a motion compensation unit (not shown in the figure). According to a hybrid video codec, the encoder 20 shown in FIG. 2 may also be referred to as a hybrid video encoder or a video encoder.

For example, the residual calculation unit 204, the transform processing unit 206, the quantization unit 208, the prediction processing unit 260, and the entropy encoding unit 270 form a forward signal path of the encoder 20, whereas the inverse quantization unit 210, the inverse transform processing unit 212, the reconstruction unit 214, the buffer 216, the loop filter 220, the DPB 230, and the prediction processing unit 260 form a backward signal path of the encoder. The backward signal path of the encoder corresponds to a signal path of a decoder (for example, the decoder 30 in FIG. 3).

For example, the encoder 20 receives a picture 201 or a picture block 203 of the picture 201 through an input end 202. The picture 201 is, for example, a picture in a sequence of pictures that form a video or a video sequence. The picture block 203 may also be referred to as a current picture block or a to-be-encoded picture block, and the picture 201 may be referred to as a current picture or a to-be-encoded picture (in particular in video coding, to distinguish the current picture from another picture, the another picture is, for example, previously encoded and/or decoded pictures of a same video sequence (namely, a video sequence that also includes the current picture)).

In an embodiment, the encoder 20 may include a partitioning unit (not shown in FIG. 2) configured to partition the picture 201 into a plurality of blocks, for example, the picture block 203. The picture 201 is typically partitioned into a plurality of non-overlapping blocks. The partitioning unit may be configured to use a same block size for all pictures of a video sequence and a corresponding raster defining the block size, or change a block size between pictures or subsets or picture groups, and partition each picture into corresponding blocks.

In an example, the prediction processing unit 260 of the encoder 20 may be configured to perform any combination of the foregoing partitioning technologies.

Although a size of the picture block 203 is smaller than that of the picture 201, like the picture 201, the picture block 203 is also or may also be considered as a two-dimensional array or matrix with sample values. In other words, the picture block 203 may include, for example, one sample array (for example, a luminance array in a case of a black-and-white picture 201), three sample arrays (for example, one luminance array and two chrominance arrays in a case of a color picture), or any other quantity and/or type of arrays depending on a used color format. Quantities of samples in horizontal and vertical directions (or axes) of the picture block 203 define the size of the picture block 203.

The encoder 20 shown in FIG. 2 is configured to encode the picture 201 block by block, for example, encode and predict each picture block 203.

The residual calculation unit 204 is configured to calculate a residual block 205 based on the picture block 203 and a prediction block 265 (the prediction block 265 is further described in detail below), for example, by subtracting sample values of the prediction block 265 from sample values of the picture block 203 sample by sample (pixel by pixel), to obtain the residual block 205 in a sample domain.

The transform processing unit 206 is configured to apply a transform, for example, a discrete cosine transform (discrete cosine transform, DCT) or a discrete sine transform (discrete sine transform, DST), on the sample value of the residual block 205 to obtain a transform coefficient 207 in a transform domain. The transform coefficient 207 may also be referred to as a transform residual coefficient and represents the residual block 205 in the transform domain.

The transform processing unit 206 may be configured to apply integer approximations of DCT/DST, such as transforms specified in HEVC/H.265. Compared to an orthogonal DCT, such integer approximations are typically scaled based on a factor. In order to preserve a norm of the residual block which is processed by forward and inverse transforms, another scaling factor is used as a part of the transform process. The scaling factor is usually selected based on some constraints, for example, the scaling factor being a power of 2 for a shift operation, a bit depth of the transform coefficient, and a tradeoff between precision and implementation costs. For example, the inverse transform processing unit 212 specifies a specific scaling factor for the inverse transform on the decoder side 30 (and for example, the inverse transform processing unit 212 specifies a scaling factor for the corresponding inverse transform on the encoder side 20). Correspondingly, the transform processing unit 206 may specify a corresponding scaling factor for a forward transform on the encoder side 20.

The quantization unit 208 is configured to quantize the transform coefficients 207 (for example, perform scalar quantization or vector quantization) to obtain quantized transform coefficients 209. The quantized transform coefficients 209 may also be referred to as quantized residual coefficients 209. A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for scalar quantization, different scaling may be performed to implement finer or coarser quantization. A smaller quantization step indicates finer quantization, and a larger quantization step indicates coarser quantization. An appropriate quantization step may be indicated by the QP. For example, the quantization parameter may be an index to a predefined set of appropriate quantization steps. For example, a smaller quantization parameter may correspond to finer quantization (for example, a smaller quantization step) and a larger quantization parameter may correspond to coarser quantization (for example, a larger quantization step), or vice versa. The quantization may include division by a quantization step and corresponding quantization or dequantization (for example, performed by the inverse quantization unit 210), or may include multiplication by a quantization step. According to the standards such as HEVC, in an embodiment, the quantization parameter may be used to determine the quantization step. Generally, the quantization step may be calculated based on the quantization parameter through a fixed-point approximation of an equation including division. Other scaling factors may be introduced for quantization and dequantization to restore the norm of the residual block, where the norm may be modified because of scaling used in the fixed-point approximation of the equation for the quantization step and the quantization parameter. In an example embodiment, the scaling of the inverse transform may be combined with the scaling of the dequantization. Alternatively, a customized quantization table may be used and signaled from an encoder to a decoder, for example, in a bitstream. The quantization is a lossy operation, where a larger quantization step indicates a larger loss.

The inverse quantization unit 210 is configured to perform inverse quantization on the quantized coefficients of the quantization unit 208 to obtain dequantized coefficients 211, for example, apply, based on or by using a same quantization step as that of the quantization unit 208, an inverse of a quantization scheme used by the quantization unit 208. The dequantized coefficients 211 may also be referred to as dequantized residual coefficients 211, and correspond to the transform coefficients 207 although typically not identical to the transform coefficients due to a loss caused by the quantization.

The inverse transform processing unit 212 is configured to perform inverse transform (for example, inverse DCT or inverse DST) on the transform performed by the transform processing unit 206, to obtain an inverse transform block 213 in the sample domain. The inverse transform block 213 may also be referred to as an inverse transform dequantized block 213 or an inverse transform residual block 213.

The reconstruction unit 214 (for example, a summer 214) is configured to add the inverse transform block 213 (namely, a reconstructed residual block 213) to the prediction block 265 to obtain a reconstructed block 215 in the sample domain, for example, by adding a sample value of the reconstructed residual block 213 to a sample value of the prediction block 265.

In an embodiment, a buffer unit (or a buffer) 216, for example, a line buffer 216, is configured to buffer or store the reconstructed block 215 and a corresponding sample value, for example, for intra prediction. In other embodiments, the encoder may use an unfiltered reconstructed block and/or the corresponding sample value stored in the buffer unit 216 for any type of estimation and/or prediction, for example, intra prediction.

For example, in an embodiment, the encoder 20 may make the buffer unit 216 used not only for storing the reconstructed block 215 for intra prediction but also for the loop filter unit 220 (not shown in FIG. 2), and/or make, for example, the buffer unit 216 and the decoded picture buffer unit 230 form one buffer. In other embodiments, filtered blocks 221 and/or blocks or samples from the decoded picture buffer 230 (the blocks or samples are not shown in FIG. 2) may be used as an input or a basis for the intra prediction.

The loop filter unit (or loop filter) 220 is configured to filter the reconstructed block 215 to obtain the filtered block 221, to smooth pixel transition or improve video quality. The loop filter unit 220 represents one or more loop filters including a de-blocking filter, a sample-adaptive offset (sample-adaptive offset, SAO) filter, and another filter, for example, a bilateral filter, an adaptive loop filter (adaptive loop filter, ALF), a sharpening or smoothing filter, or a collaborative filter. Although the loop filter unit 220 is shown in FIG. 2 as an in-loop filter, in other configurations, the loop filter unit 220 may be implemented as a post loop filter. The filtered block 221 may also be referred to as a filtered reconstructed block 221. The decoded picture buffer 230 may store a reconstructed encoded block after the loop filter unit 220 performs a filtering operation on the reconstructed encoded block.

For example, in an embodiment, the encoder 20 (correspondingly, the loop filter unit 220) may directly output a loop filter parameter (for example, sample-adaptive offset information) or output the loop filter parameter after the entropy encoding unit 270 or any other entropy encoding unit performs entropy encoding, so that, for example, the decoder 30 can receive the same loop filter parameter and apply the same loop filter parameter to decoding.

The DPB 230 may be a reference picture memory that stores reference picture data, and the reference picture data is used by the encoder 20 to encode video data. The DPB 230 may be formed by any one of a variety of memory devices, such as a DRAM (including a synchronous DRAM (synchronous DRAM, SDRAM)), a magnetoresistive RAM (magnetoresistive RAM, MRAM), a resistive RAM (resistive RAM, RRAM), or another type of memory device. The DPB 230 and the buffer 216 may be provided by a same memory device, or may be provided by different memory devices. In an embodiment, the DPB 230 is configured to store the filtered block 221. The DPB 230 may be further configured to store other previously filtered blocks (for example, previously reconstructed and filtered blocks 221) of a same current picture or different pictures (for example, previously reconstructed pictures), and may provide a completely previously reconstructed (that is, decoded) picture (and a corresponding reference block and sample) and/or a partially reconstructed current picture (and a corresponding reference block and sample), for, for example, inter prediction. In an embodiment, if the reconstructed block 215 is reconstructed but no in-loop filtering is performed, the DPB 230 is configured to store the reconstructed block 215.

The prediction processing unit 260, also referred to as a block prediction processing unit 260, is configured to receive or obtain the picture block 203 (for example, a current picture block 203 of the current picture 201) and reconstructed picture data, for example, reference samples of a same (or current) picture from the buffer 216 and/or reference picture data 231 of one or more previously decoded pictures from the decoded picture buffer 230, and is configured to process such data for prediction, namely, to provide the prediction block 265, where the prediction block 265 may be an inter prediction block 245 or an intra prediction block 255.

The mode selection unit 262 may be configured to select a prediction mode (for example, an intra or inter prediction mode) and/or select the corresponding prediction block 245 or 255 as the prediction block 265 for calculation of the residual block 205 and reconstruction of the reconstructed block 215.

In an embodiment, the mode selection unit 262 may be configured to select a prediction mode (for example, from a prediction mode supported by the prediction processing unit 260). The prediction mode provides an optimal match, in other words, a minimum residual (the minimum residual means better compression for transmission or storage), or provides minimum signaling overheads (the minimum signaling overheads mean better compression for transmission or storage), or considers or balances both. The mode selection unit 262 may be configured to determine the prediction mode based on rate distortion optimization (rate-distortion optimization, RDO), that is, select a prediction mode that provides minimum rate distortion optimization or select a prediction mode for which related rate distortion satisfies at least a prediction mode selection criterion.

Prediction processing (for example, by the prediction processing unit 260) and mode selection (for example, by the mode selection unit 262) that are performed by the example encoder 20 are described in more detail below.

As described above, the encoder 20 is configured to determine or select an optimal prediction mode from a set of prediction modes (which may be predetermined). The set of prediction modes may include, for example, an intra prediction mode and/or an inter prediction mode.

A set of intra prediction modes may include 35 different intra prediction modes, for example, non-directional modes such as a DC (or mean) mode and a planar mode, or directional modes such as those defined in H.265; or may include 67 different intra prediction modes, for example, non-directional modes such as a DC (or mean) mode and a planar mode, and directional modes such as those defined in H.266, or directional modes such as those defined in H.267 under development.

In an embodiment, a set of inter prediction modes depends on an available reference picture (for example, at least partially decoded pictures stored in the DBP 230) and another inter prediction parameter, for example, depends on whether to use an entire reference picture or only a part of the reference picture, for example, a search window region around a region of the current block is used to search for a best matching reference block, and/or for example, depends on whether to apply pixel interpolation, for example, half-pixel and/or quarter-pixel interpolation. For example, the set of inter prediction modes may include an advanced motion vector predictor (advanced motion vector predictor, AMVP) mode and a merge mode. In an embodiment, the set of inter prediction modes may include a control point-based AMVP mode and a control point-based merge mode that are improved in embodiments of the present invention. In an example, the intra prediction unit 254 may be configured to perform any combination of intra prediction technologies described below.

In addition to the foregoing prediction modes, a skip mode and/or a direct mode may also be applied to embodiments of the present invention.

The prediction processing unit 260 may be further configured to partition the picture block 203 into smaller block partitions or subblocks, for example, by iteratively using quad-tree (quadtree, QT) partitioning, binary-tree (binary-tree, BT) partitioning, triple-tree (triple-tree, TT) partitioning, or any combination thereof, and perform, for example, prediction on each of the block partitions or subblocks, where mode selection includes selection of a tree structure of the partitioned picture block 203 and selection of a prediction mode used for each block partition or subblock.

The inter prediction unit 244 may include the motion estimation (motion estimation, ME) unit (not shown in FIG. 2) and the motion compensation (motion compensation, MC) unit (not shown in FIG. 2). The motion estimation unit is configured to receive or obtain the picture block 203 (for example, the current picture block 203 of the current picture 201) and a decoded picture 231, or at least one or more previously reconstructed blocks (for example, reconstructed blocks of one or more other/different previously decoded pictures 231), for motion estimation. For example, a video sequence may include the current picture and the previously decoded picture 331, or in other words, the current picture and the previously decoded picture 331 may be a part of or form a sequence of pictures that form the video sequence.

For example, the encoder 20 may be configured to select a reference block from a plurality of reference blocks of a same picture or different pictures in a plurality of other pictures, and provide, to the motion estimation unit (not shown in FIG. 2), a reference picture and/or an offset (a spatial offset) between a location (coordinates X and Y) of the reference block and a location of the current block as an inter prediction parameter. This offset is also referred to as a motion vector (motion vector, MV).

The motion compensation unit is configured to obtain an inter prediction parameter and perform inter prediction based on or by using the inter prediction parameter, to obtain an inter prediction block 245. Motion compensation performed by the motion compensation unit (not shown in FIG. 2) may include extracting or generating a prediction block based on a motion/block vector determined through motion estimation (interpolation may be performed to improve subpixel precision). Interpolation filtering may generate additional samples from known samples. This potentially increases a quantity of candidate prediction blocks that may be used to code a picture block. When a motion vector of a PU of the current picture block is received, the motion compensation unit 246 may locate a prediction block to which the motion vector points in a reference picture list. The motion compensation unit 246 may further generate a syntax element associated with a block and a video slice, where the syntax element is used by the decoder 30 to decode a picture block of the video slice.

In an embodiment, the inter prediction unit 244 may send a syntax element to the entropy encoding unit 270, where the syntax element includes an inter prediction parameter (for example, indication information of selection of an inter prediction mode used for prediction of the current block after traversal of a plurality of inter prediction modes). In an embodiment, if there is only one inter prediction mode, the inter prediction parameter may not be carried in the syntax element. In this case, the decoder side 30 may directly perform decoding in a default prediction mode. It may be understood that the inter prediction unit 244 may be configured to perform any combination of inter prediction technologies.

The intra prediction unit 254 is configured to obtain (for example, receive) the picture block 203 (current picture block) and one or more previously reconstructed blocks (for example, reconstructed neighboring blocks) of a same picture, for intra estimation. For example, the encoder 20 may be configured to select an intra prediction mode from a plurality of intra prediction modes (which may be predetermined).

In an embodiment, the encoder 20 may be configured to select an intra prediction mode according to an optimization criterion, for example, based on a minimum residual (for example, an intra prediction mode that provides the prediction block 255 most similar to the current picture block 203) or a minimum rate distortion.

The intra prediction unit 254 is further configured to determine the intra prediction block 255 based on an intra prediction parameter (for example, the selected intra prediction mode). In any case, after selecting an intra prediction mode for a block, the intra prediction unit 254 is also configured to provide an intra prediction parameter, that is, information indicating the selected intra prediction mode for the block, to the entropy encoding unit 270. In an example, the intra prediction unit 254 may be configured to perform any combination of intra prediction technologies.

In an embodiment, the intra prediction unit 254 may send a syntax element to the entropy encoding unit 270, where the syntax element includes an intra prediction parameter (for example, indication information of selection of an intra prediction mode used for prediction of the current block after traversal of a plurality of intra prediction modes). In an embodiment, if there is only one intra prediction mode, the intra prediction parameter may not be carried in the syntax element. In this case, the decoder side 30 may directly perform decoding in a default prediction mode.

The entropy encoding unit 270 is configured to individually or jointly (or not at all) apply an entropy encoding algorithm or scheme (for example, a variable length coding (variable length coding, VLC) scheme, a context adaptive VLC (context adaptive VLC, CAVLC) scheme, an arithmetic coding scheme, a context adaptive binary arithmetic coding (context adaptive binary arithmetic coding, CABAC) scheme, a syntax-based context adaptive binary arithmetic coding (syntax-based context-adaptive binary arithmetic coding, SBAC) scheme, probability interval partitioning entropy (probability interval partitioning entropy, PIPE) coding, or another entropy encoding method or technology) to the quantized residual coefficient 209, the inter prediction parameter, the intra prediction parameter, and/or the loop filter parameter, to obtain encoded picture data 21 that can be output via an output end 272, for example, output in a form of an encoded bitstream 21. The encoded bitstream may be sent to the video decoder 30, or archived for later sending or retrieval by the video decoder 30. The entropy encoding unit 270 may be further configured to entropy encode another syntax element for a current video slice being encoded.

Other structural changes of the video encoder 20 may be used to encode a video stream. For example, for some blocks or frames, a non-transform-based encoder 20 may directly quantize a residual signal without the transform processing unit 206. In another embodiment, the encoder 20 may have the quantization unit 208 and the inverse quantization unit 210 combined into a single unit.

In an embodiment, the encoder 20 may be configured to implement the video processing method described in the following embodiments.

It should be understood that other structural variations of the video encoder 20 may be used to encode a video stream. For example, for some picture blocks or picture frames, the video encoder 20 may directly quantize a residual signal without processing by the transform processing unit 206, and correspondingly, processing by the inverse transform processing unit 212 is not required. Alternatively, for some picture blocks or picture frames, the video encoder 20 does not generate residual data, and correspondingly, processing by the transform processing unit 206, the quantization unit 208, the inverse quantization unit 210, and the inverse transform processing unit 212 is not required. Alternatively, the video encoder 20 may directly store the reconstructed picture block as a reference block without processing by the filter 220. Alternatively, the quantization unit 208 and the inverse quantization unit 210 in the video encoder 20 may be combined. The loop filter 220 is optional, and in a case of lossless compression coding, the transform processing unit 206, the quantization unit 208, the inverse quantization unit 210, and the inverse transform processing unit 212 are optional. It should be understood that in different application scenarios, the inter prediction unit 244 and the intra prediction unit 254 may be selectively used.

FIG. 3 is a schematic/conceptual block diagram of an example of a decoder according to an embodiment. As shown in FIG. 3, the video decoder 30 is configured to receive encoded picture data (for example, an encoded bitstream) 21, for example, encoded by the encoder 20, to obtain a decoded picture 331. In a decoding process, the video decoder 30 receives video data from the video encoder 20, for example, an encoded video bitstream that represents a picture block of an encoded video slice and an associated syntax element.

In the example of FIG. 3, the decoder 30 includes an entropy decoding unit 304, an inverse quantization unit 310, an inverse transform processing unit 312, a reconstruction unit 314 (for example, a summer 314), a buffer 316, a loop filter 320, a decoded picture buffer 330, and a prediction processing unit 360. The prediction processing unit 360 may include an inter prediction unit 344, an intra prediction unit 354, and a mode selection unit 362. In some examples, the video decoder 30 may perform a decoding pass generally reciprocal to the encoding pass described with respect to the video encoder 20 shown in FIG. 2.

The entropy decoding unit 304 is configured to entropy decode encoded picture data 21 to obtain, for example, a quantized coefficient 309 and/or a decoded coding parameter (not shown in FIG. 3), for example, any one or all of an inter prediction parameter, an intra prediction parameter, a loop filter parameter, and/or another syntax element (that are/or decoded). The entropy decoding unit 304 is further configured to forward the inter prediction parameter, the intra prediction parameter, and/or the another syntax element to the prediction processing unit 360. The video decoder 30 may receive syntax elements at a video slice level and/or a video block level.

The inverse quantization unit 310 may have a same function as the inverse quantization unit 110, the inverse transform processing unit 312 may have a same function as the inverse transform processing unit 212, the reconstruction unit 314 may have a same function as the reconstruction unit 214, the buffer 316 may have a same function as the buffer 216, the loop filter 320 may have a same function as the loop filter 220, and the decoded picture buffer 330 may have a same function as the decoded picture buffer 230.

The prediction processing unit 360 may include the inter prediction unit 344 and the intra prediction unit 354. The inter prediction unit 344 may be similar to the inter prediction unit 244 in function, and the intra prediction unit 354 may be similar to the intra prediction unit 254 in function. The prediction processing unit 360 is usually configured to perform block prediction and/or obtain a prediction block 365 from encoded data 21, and (explicitly or implicitly) receive or obtain a prediction-related parameter and/or information about a selected prediction mode, for example, from the entropy decoding unit 304.

When a video slice is encoded as an intra-encoded (I) slice, the intra prediction unit 354 of the prediction processing unit 360 is configured to generate a prediction block 365 for a picture block of a current video slice based on an indicated intra prediction mode and data from a previously decoded block of a current frame or picture. When a video frame is encoded as an inter-encoded (that is, B or P) slice, the inter prediction unit 344 (for example, the motion compensation unit) of the prediction processing unit 360 is configured to generate a prediction block 365 for a video block of a current video slice based on a motion vector and another syntax element that are received from the entropy decoding unit 304. For inter prediction, the prediction block may be generated from one of reference pictures in a reference picture list. The video decoder 30 may construct reference frame lists: a list 0 and a list 1, by using a default construction technology and based on reference pictures stored in the DPB 330.

The prediction processing unit 360 is configured to determine prediction information for the video block of the current video slice by parsing the motion vector or the another syntax element and use the prediction information to generate a prediction block for a current video block being decoded. In an example of the present invention, the prediction processing unit 360 determines, by using some received syntax elements, a prediction mode (for example, intra or inter prediction) for encoding the video block of the video slice, an inter prediction slice type (for example, a B slice, a P slice, or a GPB slice), construction information of one or more of the reference picture lists for the slice, a motion vector for each inter-encoded video block of the slice, an inter prediction status of each inter-encoded video block of the slice, and other information, to decode the video block of the current video slice. In another embodiment, the syntax elements received by the video decoder 30 from a bitstream include a syntax element in one or more of an adaptive parameter set (adaptive parameter set, APS), a sequence parameter set (sequence parameter set, SPS), a picture parameter set (picture parameter set, PPS), or a slice header.

The inverse quantization unit 310 may be configured to inversely quantize (that is, dequantize (de-quantize)) a quantized transform coefficient that is provided in the bitstream and that is decoded by the entropy decoding unit 304. The inverse quantization process may include determining a to-be-applied quantization degree and a to-be-applied inverse quantization degree based on a quantization parameter calculated by the video encoder 20 for each video block of the video slice.

The inverse transform processing unit 312 is configured to apply an inverse transform (for example, an inverse DCT, an inverse integer transform, or a conceptually similar inverse transform process) to a transform coefficient to generate a residual block in a pixel domain.

The reconstruction unit 314 (for example, the summer 314) is configured to add an inverse transform block 313 (namely, a reconstructed residual block 313) to the prediction block 365 to obtain a reconstructed block 315 in the sample domain, for example, by adding a sample value of the reconstructed residual block 313 to a sample value of the prediction block 365.

The loop filter unit 320 (either in a coding loop or after the coding loop) is configured to filter the reconstructed block 315 to obtain a filtered block 321, to smooth pixel transition or improve video quality. In an example, the loop filter unit 320 may be configured to perform any combination of filtering techniques described later. The loop filter unit 320 represents one or more loop filters including a de-blocking filter, a sample-adaptive offset (sample-adaptive offset, SAO) filter, and another filter, for example, a bilateral filter, an adaptive loop filter (adaptive loop filter, ALF), a sharpening or smoothing filter, or a collaborative filter. Although the loop filter unit 320 is shown in FIG. 3 as an in-loop filter, in other configurations, the loop filter unit 320 may be implemented as a post loop filter.

A decoded filtered block 321 in a given frame or picture is then stored in the decoded picture buffer 330, and the decoded picture buffer 330 stores a reference picture used for subsequent motion compensation.

The decoder 30 is configured to output the decoded picture 331, for example, via an output end 332, for presentation to a user or viewing by the user.

Other variations of the video decoder 30 may be used to decode a compressed bitstream. For example, the decoder 30 may produce an output video stream without the loop filter unit 320. For example, for some blocks or frames, a non-transform-based decoder 30 may inversely quantize a residual signal directly without the inverse transform processing unit 312. In another implementation, the video decoder 30 may have the inverse quantization unit 310 and the inverse transform processing unit 312 combined into a single unit.

In an embodiment, the decoder 30 is configured to implement the video processing method described in the following embodiments.

It should be understood that other structural variations of the video decoder 30 may be used to decode the encoded video bitstream. For example, the video decoder 30 may generate an output video stream without processing by the filter 320. Alternatively, for some picture blocks or picture frames, the entropy decoding unit 304 of the video decoder 30 does not obtain the quantized coefficient through decoding, and correspondingly, the inverse quantization unit 310 and the inverse transform processing unit 312 are not required for processing. The loop filter 320 is optional, and in a case of lossless compression, the inverse quantization unit 310 and the inverse transform processing unit 312 are optional. It should be understood that in different application scenarios, the inter prediction unit and the intra prediction unit may be selectively used.

It should be understood that, in the encoder 20 and the decoder 30, a processing result of a procedure may be further processed and then output to a next process. For example, after a procedure such as interpolation filtering, motion vector derivation, or loop filtering, an operation such as clip (clip) or shift (shift) is further performed on a processing result of a corresponding process.

For example, a motion vector that is of a control point of a current picture block and that is derived based on a motion vector of a neighboring affine coding block may be further processed. This is not limited in this specification. For example, a value range of the motion vector is limited to a specific bit depth. It is assumed that an allowed bit depth of the motion vector is bitDepth, the range of the motion vector is from $-2^{\wedge}(bitDepth-1)$ to $2^{\wedge}(bitDepth-1)-1$, where the symbol "^" represents a power. When bitDepth is 16, the value range is from -32768 to 32767. When bitDepth is 18, the value range is from -131072 to 131071. The value range may be limited in either of the following two manners:

Manner 1: An overflowing most significant bit of the motion vector is removed:

$$ux=(vx+2^{bitDepth})\%2^{bitDepth}$$

$$vx=(ux>=2^{bitDepth-1})?(ux-2^{bitDepth}):ux$$

$$uy=(vy+2^{bitDepth})\%2^{bitDepth}$$

$$vy=(uy>=2^{bitDepth-1})?(uy-2^{bitDepth}):uy$$

For example, if a value of vx is -32769, 32767 is obtained according to the foregoing formula. The value is stored in a computer as a two's complement. The two's complement of - 32769 is 1, 01111, 1111, 1111, 1111 (17 bits). The computer processes overflow by discarding the most significant bit. Therefore, the value of vx is 0111, 1111, 1111, 1111, that is, 32767, which is the same as with a result obtained through processing according to the formula.

Manner 2: The motion vector is corrected, as shown in the following formula:

$$vx=Clip3(-2^{bitDepth-1}, 2^{bitDepth-1}-1, vx)$$

$$vy=Clip3(-2^{bitDepth-1}, 2^{bitDepth-1}-1, vy)$$

Clip3 is defined to indicate clipping a value of z to a range [x, y]:

$$Clip3(x, y, z)=\begin{cases} x & ; & z < x \\ y & ; & z > y \\ z & ; & \text{otherwise} \end{cases}$$

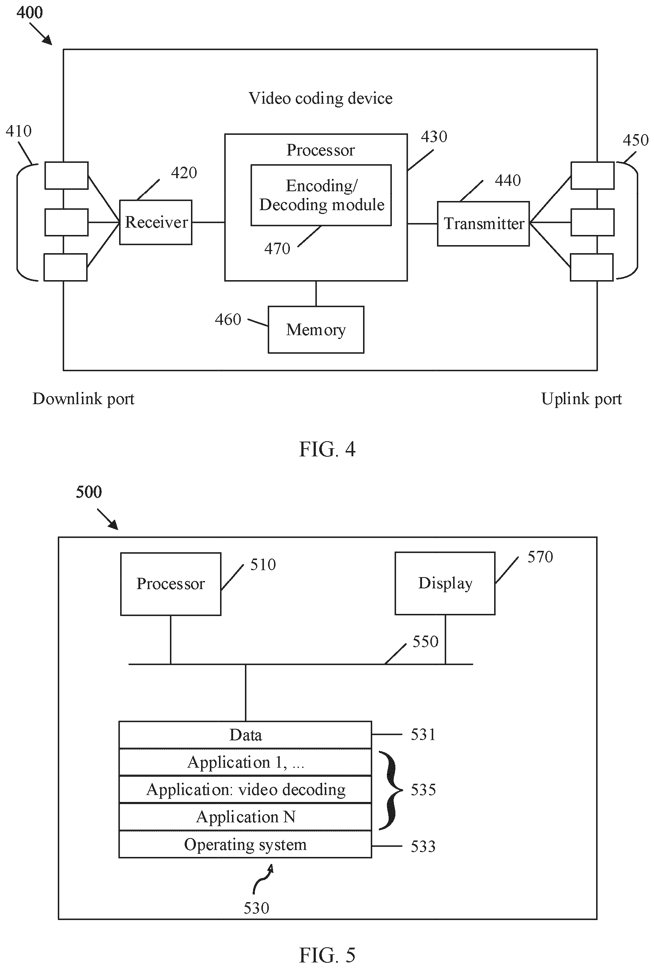

FIG. 4 is a diagram of a structure of a video coding device according to an embodiment. In FIG. 4, the video coding device 400 (for example, a video encoding device or a video decoding device) is applicable to implementing embodiments described in this specification. In an embodiment, the video coding device 400 may be a video decoder (for example, the decoder 30 in FIG. 1A) or a video encoder (for example, the encoder 20 in FIG. 1A). In another embodiment, the video coding device 400 may be one or more components of the decoder 30 in FIG. 1A or the encoder 20 in FIG. 1A.

The video coding device 400 includes ingress ports 410 and a receiver unit (Rx) 420 that are configured to receive data; a processor, a logic unit, or a central processing unit (central processing unit, CPU) 430 that is configured to process the data; egress ports 450 and a transmitter unit (Tx) 440 that are configured to send data; and a memory 460 that is configured to store the data. The video coding device 400 may also include optical-to-electrical components and electrical-to-optical (electrical-to-optical, EO) components coupled to the ingress ports 410, the receiver unit 420, the transmitter unit 440, and the egress ports 450 for egress or ingress of optical or electrical signals.

The processor 430 is implemented by hardware and software. The processor 430 may be implemented as one or more CPU chips, cores (for example, multi-core processors), FPGAs, ASICs, and DSPs. The processor 430 communicates with the ingress ports 410, the receiver unit 420, the transmitter unit 440, the egress ports 450, and the memory 460. The processor 430 includes a coding module 470 (for example, an encoding module or a decoding module). The coding module 470 implements embodiments disclosed in this specification, and implements the video processing method provided in embodiments of the present invention. For example, the coding module 470 implements, processes, or provides various coding operations. Therefore, inclusion of the coding module 470 greatly improves functions of the video coding device 400, and affects switching of the video coding device 400 to a different state. Alternatively, the coding module 470 is implemented as instructions stored in the memory 460 and executed by the processor 430.

The memory 460 includes one or more disks, tape drives, and solid-state drives and may be used as an overflowing data storage device, to store programs when such programs are selectively executed, and to store instructions and data that are read during program execution. The memory 460 may be volatile and/or nonvolatile and may be a ROM, a RAM, a ternary content-addressable memory (ternary content-addressable memory, TCAM), and/or a static random access memory (static random access memory, SRAM).

FIG. 5 is a simplified block diagram of an apparatus according to an embodiment. In FIG. 5, the apparatus 500 provided in the embodiment may be used as either or both of the source device 12 and the destination device 14 in FIG. 1A. The apparatus 500 may implement the technologies of the present invention. In other words, FIG. 5 is a block diagram of an embodiment of an encoding device or a decoding device (referred to as a coding device) according to an embodiment. Still refer to FIG. 5. The coding device 500 may include a processor 510, a memory 530, and a bus system 550. The processor is connected to the memory through the bus system, the memory is configured to store instructions, and the processor is configured to execute the instructions stored in the memory. The memory of the coding device stores program code. The processor may invoke the program code stored in the memory, to perform the video encoding or decoding method described in this specification, and in particular, various video processing methods. To avoid repetition, details are not described in this specification again.

In an embodiment, the processor 510 may be a central processing unit (central processing unit, CPU), or the processor 510 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

The memory 530 may include a read-only memory (read-only memory, ROM) device or a random access memory (random access memory, RAM) device. Any other appropriate type of storage device may also be used as the memory 530. The memory 530 may include code and data 531 that are accessed by the processor 510 through a bus 550. The memory 530 may further include an operating system 533 and an application 535. The application 535 includes at least one program that allows the processor 510 to perform the video encoding or decoding method (in particular, the video processing method described in this specification) described in this specification. For example, the application 535 may include an application 1 to an application N, and further include a video encoding or decoding application (referred to as a video coding application) that performs the video encoding or decoding method described in this specification.

In addition to a data bus, the bus system 550 may further include a power bus, a control bus, a status signal bus, and the like. However, for clarity of description, various buses are marked as the bus system 550 in the figure.

In an embodiment, the coding device 500 may further include one or more output devices, such as a display 570. In an example, the display 570 may be a touch display that combines a display and a touch unit, and the touch unit may sense a touch input operatively. The display 570 may be connected to the processor 510 through the bus 550.

A block-based hybrid video coding/compression structure is a structure used in an advanced video coding standard such as HEVC, and "hybrid" means a combination of prediction (Prediction), transform (Transform), and quantization (Quantization) coding schemes to reduce redundant signals in a video. Prediction and transform coding is to eliminate redundancy in a video signal by eliminating a correlation between a time domain, a space domain, and a frequency domain. Quantization is to reduce precision of a transform coefficient of a prediction residual to reduce a quantity of bits required for representing a residual coefficient. The quantization can remove high-frequency details insensible to human eyes to reduce an amount of to-be-coded information. In addition to prediction, transform, and quantization, the hybrid video coding structure further includes block partitioning (Block Partition), loop filtering (In-loop Filter), entropy coding (Entropy Coding), and the like as features.

A hybrid video encoder first divides an input video frame or video signal into coding tree units (Coding Tree Units, CTUs) with similar sizes, each CTU is predicted, and a prediction residual (Residual) is obtained. The prediction residual is converted to a frequency domain via a transform module, and then a quantization module performs lossy compression on frequency domain transform coefficients. One quantized transform coefficient is output to a bitstream via an entropy encoding module, and the other transform coefficients are subject to steps such as inverse quantization, inverse transform, and loop filtering, to obtain a reconstructed value of a current frame, where the reconstructed value of the current frame is used as a reference object of a subsequent coding unit.

The foregoing hybrid video coding structure is usually used to process a natural video captured by a camera. In recent years, screen content videos, including computer-generated text, graphics, and animations, become popular. The screen content videos show different colors and other signal features that are different from these of the natural video. To meet a requirement for efficient coding of such content, many screen content coding (Screen Content Coding, SCC) tools are developed, and therefore the coding efficiency is greatly improved. HEVC SCC is a 1st standard that includes an SCC function, and includes coding tools such as intra block copy (Intra Block Copy, IBC), and a palette. This can improve compression efficiency of screen content by 30% to 40%.

The IBC is an important tool for screen content coding in the HEVC SCC standard, and is a block-based prediction technology, and a mechanism of the IBC is similar to inter prediction or motion compensation. The motion compensation means that, for a current prediction unit (which may also be a current picture block, a coding block, a coding unit, a prediction unit, or the like), an encoder finds an optimal match block in a previously encoded reference picture as a predictor according to a motion search algorithm, and a motion vector (Motion Vector, MV) indicates the matching relationship. A difference obtained by subtracting the predictor from a pixel value of the current prediction unit is used as a prediction residual. The prediction residual is output to a bitstream after being processed by modules such as a transform module, a quantization module, and an entropy coding module.

A main difference between the IBC and the motion compensation is that a reference sample of the IBC is obtained from inside of a current picture (a reconstructed part), and a block vector (Block Vector, BV) similar to the motion vector is used to indicate a block matching relationship. The IBC can better process screen content having a plurality of similar graphics or words in a video frame, that is, a current block may refer to a block having a similar graphic in a current picture, and a prediction residual whose pixel value is close to 0 may be obtained. This residual occupies a very small bit rate in a bitstream. An encoding process of a syntax structure and related information that are included in the remaining part of the IBC is almost the same as that of the motion compensation.

The key of the IBC technology is to obtain coding of the block vector BV. In a related technology, for coding of the BV, an MV prediction coding method in inter prediction is still used.

For the MV prediction coding method, a motion vector MV is used in the encoder to describe a reference relationship of a similar block, to remove redundancy in a time domain or a space domain. However, since an MV of a current block is usually related to an MV of a neighboring block in a current picture or a neighboring coding picture, a conventional encoder may use the neighboring block as a predictor to reduce a signal amplitude of the MV of the current block. This is the MV prediction coding method.

During evolution of video standards, the MV prediction coding method is greatly optimized. MV prediction in H.261 is simple differential coding. In H.264/AVC, an MVP is implicitly derived through median prediction. A median of three spatially neighboring motion vectors is used as the MVP, and information about a predictor does not need to be explicitly transmitted. A list contention scheme is introduced in H.265/HEVC, collects an MVP list, and explicitly transmits an index of an optimal MVP. Here, spatially and temporally neighboring MVs are added to a candidate list; and an MV with best MV costs and SAD (sum of absolute differences) costs is selected and an index of the MV is transmitted. There are two inter prediction modes for MVP derivation in H.265: an advanced motion vector predictor (advanced motion vector predictor, AMVP) mode and a merge (Merge) mode. The AMVP mode can cope with a flexible block structure in HEVC, and the merge mode can reduce partitioning redundancy. In H.266, history-based MV prediction (HMVP) is proposed to append an MV of a latest coding block to a candidate list.

In the AMVP mode, a candidate motion vector list is first constructed based on motion information of a coding block that is spatially or temporally neighboring to a current coding block, and then rate-distortion costs of motion information in the candidate motion vector list are calculated, to select an optimal motion vector with lowest rate-distortion costs from the candidate motion vector list as a motion vector predictor (motion vector predictor, MVP) of the current coding block. The rate-distortion costs are calculated according to formula (1), where J indicates the rate-distortion costs (RD Costs), SAD indicates a sum of absolute differences (sum of absolute differences, SAD) between prediction pixel values and original pixel values obtained by performing motion estimation based on a candidate motion vector predictor, R indicates a bit rate, and λ indicates a Lagrange multiplier. An encoder side obtains an index value of the selected MVP in the candidate motion vector list and a reference frame index value, and sends the index value and the reference frame index value to a decoder side. In addition, in the AMVP mode, motion search may be further performed in a neighborhood centered on the MVP, to obtain an actual motion vector of the current coding block. The encoder side sends a difference between the MVP and the actual motion vector (for example, a motion vector difference (MVD)) to the decoder side.

$$J = SAD + \lambda R \quad (1)$$

In the merge mode, a candidate motion information list is first constructed based on motion information of a coding block that is spatially or temporally neighboring to a current coding block, optimal motion information is then determined from the candidate motion information list based on rate-distortion costs (the foregoing formula (1)), and is used as motion information of the current coding block, and then an index value (represented as a merge index) of a location of the optimal motion information in the candidate motion information list is obtained, and is sent to the decoder side.

The motion information includes at least one of reference picture information and a motion vector. The reference picture information may include at least one of the following: unidirectional/bidirectional prediction information, a reference picture list, and/or a reference picture index corresponding to the reference picture list. The motion vector is location offsets in a horizontal direction and a vertical direction.

In a merge candidate list, a history-based vector predictor (History-based motion vector predictor (MVP), HMVP) candidate set is introduced. The HMVP is described as follows:

For a history-based vector predictor (History-based MVP, HMVP) method for inter coding, in the HMVP, an HMVP candidate list is maintained and updated in time. After a non-affine inter-coded block is decoded, the list is updated by adding associated new motion information as a new HMVP candidate to a last entry of the list. An FIFO rule for constraints is used to delete an entry and add an entry to the list. An HMVP candidate may be used in the merge candidate list, and may also be used in the AMVP candidate list.

In versatile video coding (versatile video coding, VVC), a motion vector of a non-affine inter-coded block may be indicated in two manners: the advanced motion vector predictor (advanced motion vector predictor, AMVP) mode or the merge mode. For the AMVP mode, the difference (MVD) between the actual motion vector and the motion vector predictor (MVP), a reference index, and an MVP index referring to the AMVP candidate list are signaled (signaled). For the merge mode, a merge index referring to the merge candidate list is signaled, and all motion information associated with a merge candidate is inherited.

Both the AMVP candidate list and the merge candidate list are from temporally or spatially neighboring coding blocks. Under a conventional test condition, a maximum of six merge candidates and two AMVP candidates may be added to a candidate list of motion vector predictors.

MV prediction coding technologies such as AMVP and merge are proposed based on natural pictures, and an MV of a current picture block is predicted by referring to an MV of a neighborhood.

However, with development of multimedia technologies, video applications such as online conferencing and online education become popular. In these applications, text usually occupies a large part of transmitted video content, and people mainly focus on the text part. Compared with natural scenarios and other types of screen content, text content, such as electronic documents and PPTs, has obvious characteristics that text characters are complex in texture and dense in arrangement. Therefore, text compression is critical for such scenarios.

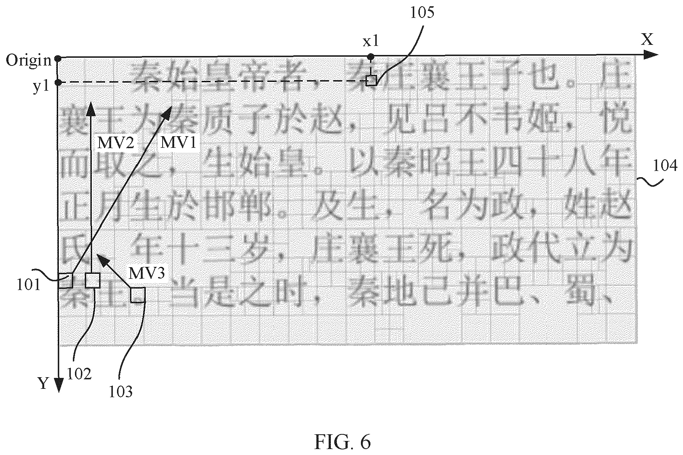

Text generally has a high character repetition rate. This means that an MV is more likely to exist between same characters (for example, characters such as Chinese characters and letters, which are not limited herein, and may be blocks of any unit size). However, characters may be randomly combined, and the same characters do not appear in groups. Except for a few phrases (for example, "Zhuang Xiangwang" in FIG. 6) that appear together, MVs of characters in the phrase may be consistent, and most neighboring characters in the text have different MVs.

FIG. 6 shows a frame of to-be-encoded picture. This video frame 104 includes a plurality of lines of text, and a grid in the picture is used to partition a to-be-encoded block in the picture. Three neighboring characters ("秦 (Qin)", " 王 (Wang)", and ".。(a Chinese symbol)") in the frame of picture are used as an example. An MV of a picture block 101 in " 秦 (Qin)" is an MV 1, an MV of a picture block 102 in "王 (Wang)" is an MV 2, and an MV of a picture block 103 corresponding to ".。" is an MV 3. It can be seen from FIG. 6 that MVs of adjacent characters are different.

Therefore, when MV prediction is performed on text content in screen display content by using existing MV prediction coding technologies such as AMVP and merge, an MV of a neighborhood of this to-be-coded current block is selected as a predictor of an MV of the current block, resulting in a large difference between the predictor of the MV and an actual MV, and low accuracy of the MV prediction. This results in a large MVD (motion vector difference), a large quantity of coding bits of the MV, and low MV coding efficiency.

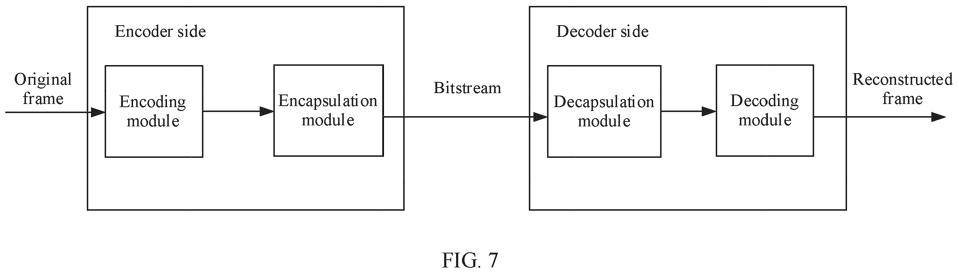

Therefore, this application provides a video transmission system. As shown in FIG. 7, the video transmission system may include an encoder side and a decoder side. The encoder side may include but is not limited to an encoding module and an encapsulation module, and the decoder side may include but is not limited to a decapsulation module and a decoding module.

As shown in FIG. 7, video transmission mainly includes the following procedures: The encoding module performs video encoding on an original frame of a video, the encapsulation module performs video encapsulation on an encoded frame, the encoder side transmits a bitstream obtained through encapsulation to the decoder side through a channel, the decapsulation module on the decoder side decapsulates the bitstream, and the decoding module performs video decoding on a decapsulated bitstream. An objective of video encoding and decoding is to obtain an encoded file with a high compression ratio for transmission, thereby reducing a network transmission burden. Video encapsulation is to convert an encoded video file into a file in a format that is easy to transmit. In this application, the encoding module and the decoding module are improved, the encoder side may maintain a location lookup table for prediction coding of an MV (motion vector) of IBC, and the decoder side establishes a same location lookup table to restore an encoded MV.

The location lookup table may include at least one candidate location, and each candidate location is an absolute location of a pixel in a to-be-coded current video frame.

The absolute location is defined as follows: Each candidate location is a location that is in the video frame and that is relative to a sample at an upper left corner of the video frame.

For the definition of the absolute location, refer to the video frame 104 shown in FIG. 6 for understanding. In FIG. 6, a plane rectangular coordinate system is established by using a pixel at an upper left corner of the video frame 104 as an origin (0, 0), and a candidate location in a location lookup table of the video frame 104 is a coordinate location relative to the origin (0, 0).

For example, a coordinate location (x1, y1) of the block 105 in the word "秦 (Qin)" that repeatedly appears for a plurality of times in FIG. 6 may be a candidate location in the location lookup table. In this way, the candidate location may be an absolute location of the block in the video frame 104.

As shown in FIG. 6, coordinates of a geometric center of the block 105 are used as coordinates of the block 105 herein. In another embodiment, a location of a block, like a boundary of the block or a geometric center of the block, is used as a coordinate location of the block in this application. This is not limited.

In addition, in this application, a coordinate system established based on the origin of the video frame 104 is not limited to the plane rectangular coordinate system shown in FIG. 6, or may be another coordinate system. However, an absolute location, defined in this application, of a pixel in a video frame is still a location (for example, the origin (0, 0) in FIG. 6) relative to a sample at an upper left corner of the video frame.

It should be understood that FIG. 6 shows only one candidate location in one location lookup table, and in another embodiment, a candidate location in the location lookup table of the video frame 104 shown in FIG. 6 is not limited to the coordinate location of the block 105 shown in FIG. 6.

For example, the video frame may include text content, and the candidate location may include an absolute location (namely, the location relative to the sample at the upper left corner of the video frame) of a repeatedly appearing block in the video frame.

In a possible implementation, when a specified identifier is identified in the bitstream, a coder side may encode or decode a video frame by using a location lookup table, where the specified identifier indicates that the video frame corresponding to the bitstream includes text content.

In this way, the location lookup table may buffer the absolute location of the block in the video frame, for example, a location of a repeatedly appearing character or picture block, and MVs of same characters in the text content are usually the same. In this way, a location of a block that is referred to for a plurality of times for IBC in the video frame can be added to the location lookup table, and is used as an optional prediction item during MV prediction coding, to improve MV prediction efficiency of the IBC, thereby improving coding efficiency of the text content in the video frame while consuming a bandwidth/bit rate as low as possible; and to reconstruct high-quality text content for viewing on a terminal, thereby improving viewing experience of a user.

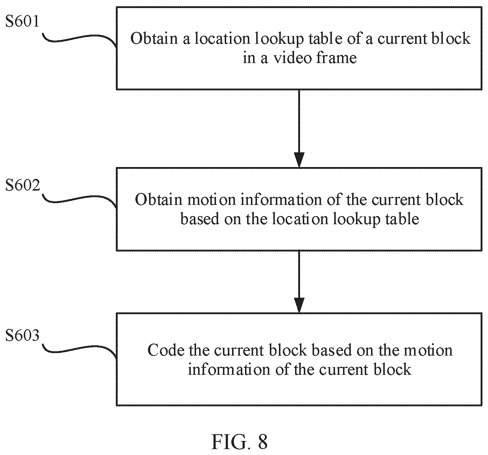

FIG. 8 shows an example of a video processing method in this application. The method may be applied to the encoder side in FIG. 7 (for example, the encoder 20 in FIG. 2) to encode a video frame, and may also be applied to the decoder side in FIG. 7 (for example, the decoder 30 in FIG. 2) to decode the video frame.

As shown in FIG. 8, the video processing method may include the following steps.

S601: Obtain a location lookup table of a current block in a video frame.

In an embodiment, the encoder side and the decoder side may generate location lookup tables in real time in encoding and decoding processes. The location lookup tables generated by the encoder side and the decoder side are the same. For details, refer to the following example 1.

In another embodiment, the encoder side may generate a location lookup table before encoding a to-be-encoded object, and encode the location lookup table into a bitstream for transmission to the decoder side. For details, refer to the following example 2.

For example, the to-be-encoded object may be a picture, a subpicture, a slice, a largest coding unit (Largest Coding Unit, LCU), a coding tree unit (CTU), a row, a patch, a coding tree block (CTB), a coding unit (CU), a coding block (CB), a prediction unit (PU), or a region of a specific size (for example, 8×8 or 16×16). This is not limited herein.

The location lookup table may include one or more candidate locations (Position Candidate), and each candidate location includes location coordinates of an absolute location in the video frame.

In an embodiment, the encoder side or the decoder side may allocate a counter to each location lookup table, to record a total quantity of candidate locations in the location lookup table.

In an example, the encoder side or the decoder side may initialize the counter to zero before encoding or decoding a picture, a subpicture, a slice, an LCU, a CTU, a row, or a patch.

In an example, the encoder side or the decoder side may update the counter after encoding or decoding a CTU, a CTB, a CU, a CB, a PU, or a region of a specific size (for example, 8×8 or 16×16).

In an example, each time the encoder side or the decoder side adds one candidate location to the location lookup table, a value of the counter of the location lookup table is increased by 1.

In an embodiment, a size of a location lookup table (an allowed total quantity of candidate locations) and/or a quantity of location lookup tables may be fixed or adaptive, and sizes of location lookup tables of different objects may be the same or different. This is not limited herein.

In an example, sizes of different location lookup tables may be different.

In an example, the encoder side or the decoder side may pre-specify a size of a location lookup table and/or a quantity of location lookup tables.

In an example, a size of a location lookup table and/or a quantity of location lookup tables may be transmitted in a video parameter set (VPS), a sequence parameter set (SPS), a picture parameter set (PPS), a picture header (Picture Header), a slice header (Slice Header), a patch header (Patch Header), a CTU, a CTB, a CU, a PU, or a region covering a plurality of CTUs, CTBs, CUs, or PUs. This is not limited in this application.

Example 1

The encoder side and the decoder side may generate location lookup tables in real time in encoding and decoding processes. The location lookup tables generated by the encoder side and the decoder side are the same, and a principle of a process of generating the location lookup table in real time by the encoder side is the same as thatt on the decoder side. The encoder side is used as an example for description herein, and this is the same for the decoder side. Details are not described herein again.

After encoding one block, the encoder side may add a location of this block (that is, an encoded block) or a reference location of this block (that is, the encoded block) to the location lookup table, where the location lookup table is initially an empty table.

The reference location is an absolute location of a block (referred to as a "reference block" for short) to which motion information of the encoded block points in a video frame to which the encoded block belongs.

After encoding a current block (for example, a to-be-encoded block) in the video frame by using an IBC technology, the encoder side may update a location of this block or a reference location of this block to a location lookup table.

In an example a1, when the encoder side encodes a block based on actual motion information of the to-be-encoded block (for example, in an AMVP mode), after encoding the block, the encoder side may add location information of a block (for example, coordinates (x, y) of an absolute location of the block in a current video frame) to a location lookup table.

In some embodiments, because a motion vector consistent with a character that appears for the first time in a video frame cannot be found in a neighborhood, a motion vector of a block in the neighborhood cannot be used as a motion vector of a block in the character. Therefore, a character that appears for the first time in repeated characters in the video frame is usually encoded in an AMVP mode instead of a merge mode.

In this case, a location, in the video frame, of a block that is encoded in the AMVP mode of the IBC is usually a location at which the repeated character appears for the first time in the video frame (referred to as a "character start location" for short), and the character start location is usually also a location that is frequently used as a reference location. Therefore, only the location of the block encoded in the AMVP mode is added to the location lookup table, a location at which a character with a high appearing frequency appears for the first time in the video frame can be located more accurately.

In an example b1, when a character that appears for the first time in repeated characters in a video frame is encoded in an AMVP mode, an MVP determined from an MVP of a neighborhood is greatly different from an actual MV of the character, and an MVD is large. Therefore, when a character at a character start location in the video frame is encoded, a large quantity of bits are consumed for motion information (for example, an MV) of a block of the character.

Therefore, when the encoder side determines, after encoding a block, that the quantity of bits consumed for the motion information (MV) of the block is greater than a first preset threshold, it indicates that accuracy of an MVP of the encoded block is low, and the encoded block is likely to be a block of a character that appears for the first time in the picture. In this case, the encoder side may add location information (x, y) of the encoded block in the video frame to the location lookup table.

In an example c1, when the encoder side determines that an absolute value of a horizontal component and/or an absolute value of a vertical component of an MVD of the encoded block are/is greater than a second preset threshold, it indicates that a large quantity of bits are consumed when the encoder side encodes the MVD of the block, and it may also indicate that the encoded block is likely to be a block of a character that appears for the first time in the video frame. In this case, the encoder side may add location information (x, y) of the encoded block in the video frame to the location lookup table.

In an example d1, when the encoder side determines that a sum of an absolute value of a horizontal component and an absolute value of a vertical component of an MVD of the encoded block is greater than a third preset threshold, it indicates that a large quantity of bits are consumed when the encoder side encodes the MVD of the block, and it may also indicate that the encoded block is likely to be a block of a character that appears for the first time in the video frame. In this case, the encoder side may add location information (x, y) of the encoded block in the video frame to the location lookup table.

In an example e1, if the encoder side determines that the motion information (for example, the MV) of the encoded block is derived based on the location lookup table, a location of the block in the video frame may not be added to the location lookup table.

For example, in FIG. 6, location coordinates of a block of a 1st character "秦 (Qin)" in a first row in the frame of picture shown in FIG. 6 are stored in a location lookup table. In this case, the encoder side may predict, based on the location coordinates of the 1st character "秦 (Qin)" stored in the location lookup table, motion vectors (MV) of other words "秦 (Qin)" that appear in FIG. 6, and location coordinates of words "秦 (Qin)" other than the 1st "秦 (Qin)" in the frame of picture do not need to be used, to predict a motion vector of a word "秦 (Qin)" word at another location, so as to avoid redundancy of a character corresponding to a candidate location in the location lookup table.

In an example f1, the encoder side may further add the reference location of the encoded block to the location lookup table.

The reference location is an absolute location of a block (referred to as a "reference block" for short) that is referred to for predicting motion information of the current block.

In an example g1, the encoder side updates the location lookup table only when determining that a size of the encoded block is equal to a specific size (for example, 8×8 or 16×16).

In an example h1, when the encoder side determines that a value of a counter of a location lookup table reaches a maximum value, the encoder side may stop updating the location lookup table. Alternatively, when the encoder side determines that a location lookup table reaches a maximum allowable counter value, the encoder side may remove a 1st candidate location (a candidate location whose index is equal to 0) from the location lookup table, subtract 1 from indexes of all subsequent candidate locations in the location lookup table, and then add a new candidate location to the location lookup table.

It should be understood that the example a1 to the example h1 may be randomly combined to form a new example. In addition, the process of updating the location lookup table in real time in this application is not limited to the examples in the foregoing examples. In addition, the foregoing process of updating the location lookup table in real time may also be applied to the decoder side. After decoding a current block (for example, a to-be-decoded block) in the video frame by using an IBC technology, the decoder side may update a location of this block or a reference location of this block to the location lookup table. A specific process and an example principle are the same as those described for the encoder side. Details are not described herein again.

In this way, the encoder side and the decoder side in this application may respectively maintain the location lookup tables. The location lookup table may include at least one candidate location, and each candidate location is an absolute location of a block in the video frame. It should be understood that, although the foregoing description is provided by using an example in which the block in the video frame is a to-be-encoded object, the candidate location in the location lookup table may alternatively be an absolute location of a to-be-encoded object in another unit (for example, a CTU, a CTB, a CU, a CB, a PU, or a region of a specific size, which is not limited herein) in the video frame.

In this way, the candidate location in the location lookup table maintained by each of the encoder side and the decoder side in this application in the encoding or decoding process may be an absolute location that may be frequently used as a reference location in the video frame. In this case, for a block of a frequently appearing character in the video frame, the candidate location in the location lookup table is used, so that a predicted MV is more accurate, and an MVD is smaller. This improves MV coding efficiency.

In another example, the candidate location in the location lookup table may alternatively be a location at which a repeated character does not appear for the first time in the video frame.

In another example, the candidate location in the location lookup table may alternatively be a location at which a character appears for the first time in the video frame, where the character is not limited to a character that is the same as the character and that is in the video frame.

In the example 1, the encoder side and the decoder side may generate the location lookup tables in real time in the encoding and decoding processes. The location lookup table may be updated with coding of a coding decision. In addition, both the encoder side and the decoder side may maintain a same location lookup table, to accurately encode and decode an MV. In addition, according to the method in this embodiment, before encoding and decoding, region partitioning does not need to be performed on the video frame, and a lookup table of each region does not need to be generated. In this operation manner, encoding and decoding complexity is lower.

Example 2

The encoder side may generate a global location lookup table (global lookup table for short) of at least one region in a current video frame in advance, and encode the global location lookup table into a bitstream for transmission to the decoder side.

In this way, the encoder side and the decoder side may obtain a location lookup table of a current block (for example, a to-be-encoded block or a to-be-decoded block) in the current video frame based on the global location lookup table.

A global lookup table of a region may include at least one candidate location (also referred to as a first location herein), where the first location is an absolute location in the current video frame, and the at least one first location is a location that is in the region and that is relative to a sample at an upper left corner of the current video frame (a to-be-coded current video frame).

The following describes, in step 1 and step 2, a process in which the encoder side obtains the lookup table of the current block in the current video frame.

Step 1: Before encoding a to-be-encoded object, the encoder side may pre-analyze the at least one region in the current video frame to obtain the global location lookup table of the at least one region in the current video frame, where each region may have a global location lookup table.

For example, the region may be a picture, a subpicture, a slice, a patch, a CTU, or a row. This is not limited herein.

In an example a2, the encoder side may scan pixels of each $M \times M$ block (for example, $4 \times 4$, $8 \times 8$, or $16 \times 16$, which is not limited) in the region in a raster (Raster) scanning order (for example, from left to right or from top to bottom). It should be understood that a scanning order is not limited in this application. Then, the encoder side may calculate a hash value for each scanned $M \times M$ block in the region, and collect statistics on a quantity of blocks with a same hash value. Then, the encoder side may sort, in descending order of quantities of blocks, the quantities of blocks obtained through statistics collection, and determine, from a result of the sorting, N hash values respectively corresponding to the first N quantities of blocks. The encoder side may obtain an absolute location, namely, a coordinate location, of a $1^{st}$ scanned $M \times M$ block (which is not limited to the $1^{st}$ $M \times M$ block herein, or may be a $2^{nd}$ $M \times M$ block, a $3^{rd}$ $M \times M$ block, or the like) corresponding to each of the N hash values in the current video frame, to generate the global location lookup table of the region.

For example, a $1^{st}$ pixel at an upper left corner of the current video frame is used as an origin of a plane rectangular coordinate system, to determine a coordinate location of each $M \times M$ block in the region.

In this way, the global location lookup table of the region may include one or more candidate locations (N candidate locations herein), and each candidate location may be a location at which a block of a character that frequently appears in the region appears for the first time, that is, a character start location. Certainly, if the absolute locations, of the $M \times M$ blocks respectively corresponding to the N hash values, obtained by the encoder side in the foregoing process are not the $1^{st}$ scanned $M \times M$ block corresponding to each hash value, the candidate location in the global location lookup table may alternatively be a location at which a block of a character that frequently appears in the region does not appear for the first time (for example, a location at which the block appears for the second time or the third time). This is not limited herein.

Optionally, the candidate locations in the global location lookup table may also include at least two display locations (namely, the absolute locations) of a same character in the region, that is, absolute locations of at least two $M \times M$ blocks with a same hash value in the region may be used as candidate locations in the global location lookup table.

In this example, when pre-analyzing a region, the encoder side may locate, by collecting statistics on hash values of characters in the region, a character that frequently appears in the region, to generate a global location lookup table of the region based on an absolute location of the character in the region.

It should be understood that, when the current video frame is partitioned into a plurality of regions, and each region is pre-analyzed to obtain a respective global location lookup table, there is no pixel overlapping in the plurality of regions.

In another example b2, the encoder side may further convert display content of a region into text according to an optical character recognition (optical character recognition, OCR) method for the region. Then, the encoder side may extract semantics of characters in the region from the converted text, and sort, in descending order, quantities of characters with same semantics. Then, the encoder side may determine, from a result of the sorting, N characters (high-frequency characters) respectively corresponding to quantities of the first N characters. Finally, the encoder side obtains a location at which each of the N characters appears in the region (for example, a location at which each of the N characters appears for the first time, which is not limited herein). When determining an order of locations at which the characters appear, the encoder side may determine an appearing order of same characters in the region in a raster scanning order. In this case, the encoder side may use locations at which the N characters appear for the first time in the region (which are also absolute locations in the current video frame, namely, locations relative to a sample at the upper left corner of the current video frame) as candidate locations, to generate a global location lookup table of the region.

It should be noted that the manner of obtaining the global location lookup table in this application is not limited to the implementation of the example a2 and example b2, and may further include another implementation, to determine an absolute location of a high-frequency character in a region in a video frame, to obtain the global location lookup table. The implementation is not limited in this application.

In some embodiments, the candidate location in the global location lookup table is not limited to a location of a character (or a picture block) that frequently appears in the region. A frequency at which a character or a picture block corresponding to the candidate location in the global location lookup table appears in the region is not limited in this application.

In a possible implementation, the encoder side may transmit, to the decoder side, at least one global location lookup table respectively corresponding to the at least one region (for example, encode the at least one global location lookup table into a bitstream for transmission).

For example, before encoding the region, the encoder side may obtain the global location lookup table of the region in advance, and may transmit both the global location lookup table and encoded data of the region to the decoder side. The decoder side may obtain the global location lookup table of the region by parsing the bitstream.

For example, the encoder side may transmit the global location lookup table in a VPS, an SPS, a PPS, a picture header, a slice header, a patch header, a CTU, a CTB, a CU, a PU, or a region covering a plurality of CTUs, CTBs, CUs, or PUs. This is not limited in this application.

In an example, a syntax design of the global location lookup table is shown in Table 1.

Table 1

| table_size_minus1 | ue(v) |
|---|---|
| if (TableSize>0) { | |
| for (i=0; i<TableSize; i++) | |
| table_pos_x[i] | u(v) |
| table_pos_y[i] | u(v) |
| } | |

In Table 1, table_size_minus1 represents a quantity of global location lookup tables minus 1. Therefore, the quantity of global location lookup tables TableSize=table_size_minus1+1.

table_pos_x[i] represents an x coordinate of an $i^{th}$ location (that is, a candidate location) in the global location lookup table. Therefore, the x coordinate of the $i^{th}$ location in the global location lookup table TablePosX[i]=table_pos_x[i].

table_pos_y[i] represents a y coordinate of the $i^{th}$ location in the global location lookup table. Therefore, the y coordinate of the $i^{th}$ location in the global location lookup table TablePosY[i]=table_pos_y[i].

The encoder side may transmit the global location lookup table based on the syntax, and the decoder side may obtain the global location lookup table by parsing the bitstream.

In another example, a syntax design of the global location lookup table is shown in Table 2.

Table 2

| table_size_minus1 | ue(v) |
|---|---|
| if (TableSize>0) { | |
| table_pos_start_x | u(v) |
| table_pos_start_y | u(v) |
| for (i=1; i<TableSize; i++) | |
| table_pos_diff_x[i] | u(v) |
| table_pos_diff_y[i] | u(v) |
| } | |

In Table 2, table_size_minus1 represents a quantity of global location lookup tables minus 1. Therefore, the quantity of global location lookup tables TableSize=table_size_minus1+1.

table_pos_start_x represents an x coordinate of a $0^{th}$ location (that is, a candidate location) in the global location lookup table. Therefore, the x coordinate of the $0^{th}$ location in the global location lookup table TablePosX[0]=table_pos_start_x.

table_pos_start_y represents a y coordinate of the $0^{th}$ location in the global location lookup table. Therefore, the y coordinate of the $0^{th}$ location in the global location lookup table TablePosY[0]=table_pos_start_y.

table_pos_diff_x[i] represents a difference between an x coordinate of an $i^{th}$ location and an x coordinate of an $(i-1)^{th}$ location in the global location lookup table. Therefore, the x coordinate of the $i^{th}$ location in the global location lookup table TablePosX[i]=table_pos_x[i-1]+table_pos_diff_x[i].

table_pos_diff_y[i] represents a difference between a y coordinate of the ith location and a y coordinate of the (i-1)th location in the global location lookup table. Therefore, the y coordinate of the ith location in the global location lookup table TablePosY[i]=table_pos_y[i-1]+table_pos_diff_y[i].

The encoder side may transmit the global location lookup table based on the syntax, and the decoder side may obtain the global location lookup table by parsing the bitstream.

Step 2: The encoder side obtains a location lookup table of a current block (for example, a current to-be-encoded block) in the current video frame based on the global location lookup table of the at least one region.

In an example a3, when encoding the current block in the region, the encoder side may use the global location lookup table of the region in which the current block is located as the location lookup table of the current block.

In another example b3, because the global location lookup table is a location lookup table generated before the encoder side encodes the region, a block at a candidate location (for example, an absolute location of a character that frequently appears in the region) in the global location lookup table has not been encoded (or decoded). When a location lookup table of a block is used to predict motion information of the block, the encoder side mainly refers to motion information of an encoded block (the decoder side refers to motion information of a decoded block). Therefore, when encoding the current block in the region, the encoder side may delete an absolute location of the unencoded block in the current video frame in the global location lookup table of the region, that is, delete the candidate location of the unencoded block in the global location lookup table, to obtain the location lookup table of the current block. Therefore, only a location of the encoded block in the region may be used as a reference location, to obtain motion information of the current block.

In the foregoing process, when encoding the region, the encoder side may perform encoding in a preset order (for example, the raster scanning order). In this case, the encoder side may determine, based on an absolute location of the current block in the current video frame, the candidate location corresponding to the unencoded block in the global location lookup table of the region, to delete some candidate locations (the candidate location of the unencoded block) in the global location lookup table of the region, to obtain the location lookup table of the current block.

In still another example c3, the current video frame may be partitioned into a plurality of regions, each region has a global location lookup table, and different regions may have a same character. In this case, when encoding a block in one (for example, a region 2) of the plurality of regions, the encoder side may further obtain a global location lookup table (for example, a global location lookup table 1) of a region (for example, a region 1) that has been encoded before the region 2 is encoded. In this way, when encoding a block in the region 2, the encoder side may combine the global location lookup table 1 of the region 1 with a global location lookup table 2 of the region 2 (a specific combination manner is not limited) to obtain a location lookup table of a current block in the region 2. In this way, when a location lookup table of a block is used to predict motion information of the block, the encoder side may use an absolute location of a block with a same character as the block in a location lookup table as a reference location of the current block, to accurately predict the motion information of the current block.

It should be understood that the example c3 in step 2 may be combined with the example a3 or the example b3. Details are not described herein again.

The specific implementation process of step 2 is described by using the encoder side as an example. When the decoder side obtains the location lookup table of the current block (the to-be-decoded block herein) in the region by using the global location lookup table of the region obtained by parsing the bitstream, an implementation principle of the process is the same as that of the implementation process of step 2 for the encoder side. When decoding the current block (the to-be-decoded block), the decoder side deletes an absolute location of an undecoded block in the global location lookup table of the region including the current block, to obtain a global location lookup table of the current block; and/or in combination with the example c3, the decoder side may combine, in various manners, a global location lookup table of a decoded region 1 with a global location lookup table of a region 2 in which the current block (the to-be-decoded block herein) is located, to obtain the global location lookup table of the current block. For details, refer to the description about the encoder side in step 2. Details are not described herein again.

In the example 2, the encoder side may generate the global location lookup table of the at least one region in the current video frame in advance, and encode the global location lookup table into the bitstream for transmission to the decoder side. In this solution, a candidate location that may be used as a reference location with a high probability in the video frame, for example, an absolute location of a picture block or a text character that repeatedly appears for a plurality of times in the video frame, may be determined in advance before the video frame is encoded and decoded, and the absolute location is stored in the global location lookup table. In addition, the encoder side may transmit the global location lookup table to the decoder side in a bitstream manner. In this way, the candidate location in the global location lookup table is more accurate, and when predicting the motion information of the block by using the global location lookup table, the encoder side and the decoder side can more easily find an accurate MV of the block.

S602: Obtain the motion information of the current block based on the location lookup table.

The encoder side or the decoder side (which may be collectively referred to as a coder side) may obtain the motion information of the current block (the to-be-encoded block or the to-be-decoded block) by performing S602.

Herein, an example in which the motion information is a motion vector (MV) is used for description. This is not limited herein.

When performing S602, the coder side may determine at least one target candidate location in the location lookup table based on the location lookup table of the current block, where the location lookup table includes at least one candidate location, and the target candidate location is a candidate location determined in the location lookup table. Then, the coder side may determine at least one motion vector predictor (MVP) of the current block based on the at least one target candidate location. Finally, the coder side may obtain the motion information of the current block based on the at least one MVP.

In an example a4, the encoder side may determine a target candidate location in the location lookup table of the current block, where the target candidate location is a candidate location, corresponding to an MV with minimum coding costs, in the location lookup table. The encoder side may convert coordinates of the target candidate location into an MVP of the current block. In an embodiment, the encoder side may use the MVP as an MV of the current block, and the encoder side may encode an index pos_idx of the target candidate location into the bitstream for transmission to the decoder side, to encode the MV of the current block. Alternatively, in another embodiment, the encoder side may perform motion search in a neighborhood centered on the MVP, to obtain an actual motion vector (MV) of the current block, and the encoder side may obtain a difference between the MVP and the MV of the current block (for example, a motion vector difference (MVD)). Therefore, MV=MVP+MVD. In this case, the encoder side may encode the index pos_idx of the target candidate location and the MVD into the bitstream for transmission to the decoder side, to encode the MV of the current block.

It should be noted that, in an IBC mode, the MV is also referred to as a block vector (BV), the MVP is also referred to as a BVP, and the MVD is also referred to as a BVD. The MV, the MVP, and the MVD are used for description below. Details are not described again.

In the example a4, the decoder side may obtain the index pos_idx of the target candidate location from the bitstream, to determine, from the location lookup table of the decoder side based on the index, the target candidate location corresponding to the index, and convert the target candidate location into the MVP of the current block (the current to-be-decoded block). In an embodiment, the decoder side may determine the MVP as the MV of the current block. In another embodiment, the decoder side may further obtain the MVD of the current block from the bitstream through decoding, to obtain the MV of the current block according to MV=MVP+MVD.

In an example b4, the encoder side may check a predetermined quantity K of candidate locations in the location lookup table of the current block in a predetermined order, where a value of the predetermined quantity K may be any integer greater than or equal to 0. This is not specifically limited. The predetermined quantity of candidate locations are also referred to as target candidate locations. The encoder side may convert each checked target candidate location (an absolute location of the block) into an MVP (a relative location of the block), and then the encoder side may construct a candidate motion vector list for the MVP obtained through conversion. The candidate motion vector list may include the MVPs obtained by converting the predetermined quantity of target candidate locations.

A policy for the predetermined order is not limited in this application, and may be checking from front to back, or checking from back to front, or checking at intervals. It should be understood that a policy for the predetermined order used by the encoder side is the same as that used by the decoder side.

In an embodiment, the candidate motion vector list includes only the MVPs obtained by converting the predetermined quantity of target candidate locations. The encoder side may determine an MVP with lowest rate-distortion costs of the current block in the candidate motion vector list according to the foregoing formula (1), and determine an index of a target candidate location corresponding to the MVP. A subsequent process is the same as the process in the foregoing example a4. Details are not described herein again.

In an embodiment, the candidate motion vector list optionally further includes two AMVP candidates in an AMVP candidate list. Alternatively, in another embodiment, the candidate motion vector list optionally further includes a merge candidate in a merge candidate list. In this case, the merge candidate list not only includes the MVP obtained by converting the target candidate location, but also may include an MVP in a neighborhood in the merge candidate list. The encoder side may determine the MV of the current block based on the candidate motion vector list. In a specific implementation process, an MVP with lowest coding costs may be selected from the candidate motion vector list according to an existing method. For example, in the merge mode, the encoder side may determine an MVP with lowest rate-distortion costs in the candidate motion vector list according to the foregoing formula (1), and use the MVP as the MV of the current block. For another example, in the AMVP mode, the encoder side may determine an MVP with lowest rate-distortion costs in the candidate motion vector list according to the foregoing formula (1), and perform motion search in a neighborhood centered on the MVP, to obtain an actual motion vector MV of the current block, to obtain an MVD of the current block, where the MVD is a difference between the MV (the actual motion vector MV) and the MVP with the lowest rate-distortion costs. It should be understood that a manner of determining the MVP with the lowest coding costs in this application is not limited to the foregoing rate-distortion cost manner. This is not limited in this application.

In this case, when the candidate motion vector list further includes the AMVP candidate in the AMVP candidate list, or optionally further includes the merge candidate in the merge candidate list, a bitstream of encoded data transmitted by the encoder side to the decoder side may include encoded data of an index of the MVP with the lowest coding costs selected from the candidate motion vector list, optionally further include encoded data of the MVD, and optionally further include encoded data of a value of the predetermined quantity K of the to-be-checked candidate locations in the location lookup table.

In the foregoing example b4, the decoder side may parse the bitstream to obtain the value of the predetermined quantity K (or the value of K is preset on the decoder side) and the index of the MVP with the lowest coding costs. For the current block (the to-be-decoded block), a predetermined quantity K of target candidate locations in the location lookup table of the current block may be checked in the predetermined order, and converted into MVPs of the current block (relative location of the block); and then the decoder side may construct a candidate motion vector list for the MVPs obtained through conversion. The candidate motion vector list may include the MVPs obtained by converting the predetermined quantity of target candidate locations.

In an embodiment, if a coding mode of the current block is the merge mode, the decoder side may further obtain the merge candidate list of the current block to use the MVP in the merge candidate list as the MVP in the candidate motion vector list, determine, from the candidate motion vector list based on the index of the MVP obtained by parsing the bitstream, an MVP to which the index points, and use the MVP as the MV of the current block.

In another embodiment, if a coding mode of the current block is the AMVP mode, the decoder side may further obtain the AMVP candidate list of the current block to use the MVP in the AMVP candidate list as the MVP in the candidate motion vector list, determine, from the candidate motion vector list based on the index of the MVP obtained by parsing the bitstream, an MVP to which the index points, obtain the MVD of the current block by parsing the bitstream, and obtain the MV of the current block (MV=MVP+MVD) based on the MVP and the MVD.

In the foregoing example b4, the quantity K of the to-be-checked candidate locations in the location lookup table may be pre-defined.

In an example, the quantity K may be related to at least one of coding information of blocks (with different list lengths), a block size, a block shape, and the like.

For example, when the coding mode is the AMVP mode, the value of K may be small, for example, K=2. When the coding mode is the merge mode, the value of K may be large, for example, K=44.

For another example, when a size of the current block is large, the value of K may be large. When a size of the current block is small, the value of K may be small.

In an example, the encoder side may transmit the quantity K in a VPS, an SPS, a PPS, a picture header, a slice header, a patch header, a CTU, a CTB, a CU, a PU, or a region covering a plurality of CTUs, CTBs, CUs, or PUs. This is not limited in this application.

The foregoing example a4 and example b4 describe two methods of using the location lookup table. When the location lookup table is used based on the location index of the target candidate location, described in the example a4, the following describes the process in detail with reference to an example 3. The process of predicting the MV of the current block based on the index of the MVP in the candidate motion vector list by checking the quantity K of candidate locations and constructing the candidate motion vector list, described in the example b4, is described in detail with reference to an example 4.

Example 3

A process of using a location lookup table to perform MV prediction based on a candidate location in the location lookup table is as follows.

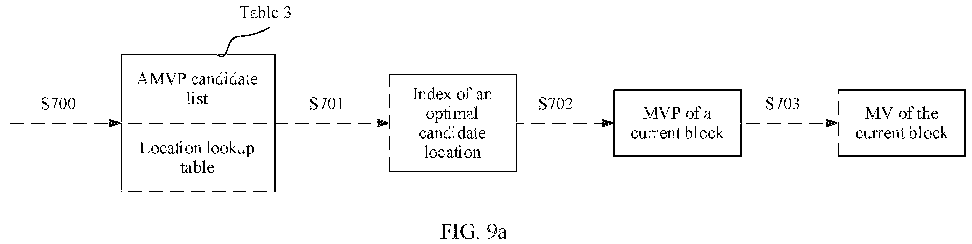

FIG. 9a shows an example of a process in which a coder side performs MV prediction of a current block by using a location lookup table.

The process shown in FIG. 9a may be applied to an encoder side, and may also be applied to a decoder side. The encoder side and the decoder side are collectively referred to as the coder side. As shown in FIG. 9a, the process may include the following steps.

S700: Generate Table 3.

Table 3 may include a location lookup table, and optionally include an AMVP candidate in an AMVP candidate list. Specific content of Table 3 is shown in Table 3 below.

When Table 3 is generated, when the coder side performs coding (encoding or decoding) on the current block, a length of the AMVP candidate list may be extended. As described above, an original length of the AMVP candidate list is 2, and the AMVP candidate list may be used to store two AMVP candidates, for example, an MVP 0 and an MVP 1 in Table 3, where the MVP 0 and the MVP 1 are MVs of coded blocks that are temporally or spatially neighboring to the current block. Herein, the coder side may extend the length of the AMVP candidate list to 3, where the location lookup table may be represented as a 3rd MVP candidate in the AMVP candidate list. As shown in Table 3, when mvp_idx is 2, it indicates that the location lookup table is used to encode and decode a bitstream.

It should be understood that a location of the location lookup table in the AMVP candidate list is not limited in this application. Although mvp_idx corresponding to the location lookup table in Table 3 is 2, in another embodiment, mvp_idx of the location lookup table in the AMVP candidate list may alternatively be 0 (to be specific, the location lookup table is used as a 1st MVP candidate in the AMVP candidate list, and an original MVP candidate in the AMVP candidate list is arranged after the location lookup table) or 1. That is, an arrangement order of the location lookup table and the original MVP candidate in the AMVP candidate list is not limited in this application.

It should be understood that the two MVP candidates in the AMVP candidate list are also obtained and updated by the coder side in real time, and the two MVP candidates also change based on different current blocks.

In a possible implementation, when adding the location lookup table to the AMVP candidate list, the coder side may further convert each candidate location in the location lookup table into an MVP candidate of the current block, and check whether the MVP candidates obtained through conversion and the original MVP candidates (for example, the MVP 0 and the MVP 1 in Table 3) in the AMVP candidate list have a same MVP candidate. If they have the same MVP candidate, a redundant MVP candidate may be deleted. Specifically, the original MVP candidate may be deleted, or a candidate location corresponding to the corresponding redundant MVP candidate in the location lookup table may be deleted. This is not limited herein. In this way, the AMVP candidate list with the newly added location lookup table, for example, Table 3, can avoid redundancy of the MVP candidate.

In this embodiment, the coder side may use a location lookup table mode as a new IBC mode.

Table 3

| mvp_idx | pos_idx | Candidate (MVP candidate) |
|---------|---------|---------------------------|
| 0 | - | MVP 0 |
| 1 | - | MVP 1 |
| 2 | 0, 1, 2, ..., and n-1 | Pos0, Pos1, Pos2, ..., and Pos(n-1) |

In the example 3, an extended AMVP candidate list is used as an example to describe the process of using the location lookup table. In another embodiment, the location lookup table may alternatively be used as a merge candidate (also the MV of the coded block in a neighborhood of the current block) in a merge candidate list. For example, the merge candidate list may include five merge candidates, and the location lookup table may be used as a newly added merge candidate in the merge candidate list. An arrangement order of the original five merge candidates (a quantity is not limited herein) in the merge candidate list and the location lookup table added to the merge candidate list is also not limited herein, and redundancy check may also be performed on the original five merge candidates and the MVP candidates in the location lookup table. The method is similar. Details are not described herein again.

Table 3 shows an example in which the coder side uses syntax of the location lookup table.

As shown in Table 3, mvp_idx represents an index of the MVP candidate in the AMVP candidate list, pos_idx represents an index, used for the current block when an MV of the current block is predicted by using the location lookup table, of an optimal candidate location (that is, the target candidate location described above) in the location lookup table, and the candidate represents the MVP candidate.

In this embodiment, the location lookup table may include n candidate locations, and coordinates of absolute locations of the n candidate locations in a current video frame are respectively represented as Pos0, Pos1, Pos2, ..., and Pos(n-1).

For the to-be-encoded current block, the encoder side may determine, based on location coordinates of the current block in the current video frame, an MVP candidate or optimal candidate location with lowest coding costs in Table 3. In an embodiment, when the MVP 0 or the MVP 1 in Table 3 has the lowest coding costs, the location lookup table does not need to be used this time to predict the MV of the current block; or when an MVP corresponding to one candidate location in Table 3 has the lowest coding costs, the location lookup table needs to be used this time to predict the MV of the current block.

In an embodiment 1, when coding costs corresponding to all candidates (including the two MVP candidates and the n candidate locations) in Table 3 are determined, an MVP corresponding to each candidate may be constructed and MVD=MV-MVP may be calculated, to calculate coding costs of an MVD of each candidate. The MV herein is an actual motion vector of the current block obtained by performing motion search in a neighborhood centered on the MVP.

Each candidate location in Table 3 may be converted into an MVP candidate of the current block. For example, if location coordinates of the current block are (x, y), and coordinates of a candidate location in the location lookup table are (pred_x, pred_y), coordinates of an MVP candidate obtained through conversion of the candidate location are (mvp_x, mvp_y), where mvp_x=pred_x-x, and mvp_y=pred_y-y.

When the MVP 0 or the MVP 1 in Table 3 is used to predict the MV of the current block, coding costs may include a quantity of information bits for coding mvp_idx and a quantity of information bits for coding the MVD.

When the location lookup table in Table 3 is used to predict the MV of the current block, coding costs may include a quantity of information bits for coding mvp_idx, a quantity of information bits for coding the MVD, and a quantity of information bits for coding pos_idx.

When content of the current block is a character, because the MVP 0 and the MVP 1 in Table 3 are the MVs of the encoded blocks in neighborhoods of the current block, and MVs of adjacent characters are usually different, a difference between each of the MVP 0 and the MVP 1 and the actual motion vector MV of the current block is large, and a value of the MVD is large. Therefore, when the MVP 0 or the MVP 1 in Table 3 is used to predict the MV of the current block, the obtained MVD is large, and coding costs of the MVD are high.

When content of the current block is a character, and when the location lookup table in Table 3 is used to predict the MV of the current block, the candidate location in the location lookup table is an absolute location of a character that frequently appears in the current video frame. Therefore, when the character of the current block is a high-frequency character, for example, "秦 (Qin)" in FIG. 6, an MVP of the current block obtained by using the candidate location in the location lookup table is closer to the MV of the current block, and a value of the MVD is small. Therefore, coding costs of the MVD are lower than those required by using the MVP 0 or the MVP 1.

Therefore, when the content of the current block is the character, the encoder side may predict the MV of the current block by using the location lookup table, and determine, from the location lookup table, an index pos_idx of the optimal candidate location with the lowest coding costs.

When a record 3 (that is, the location lookup table) in Table 3 is used to predict the MV of the current block, the coding costs include mvp_idx, pos_idx, and the MVD. When a record 1 or a record 2 (that is, an MV of the neighborhood) in Table 3 is used to predict the MV of the current block, the coding costs include mvp_idx and the MVD. Although coding costs of the index pos_idx of the candidate location are increased by using the location lookup table, the coding costs of the MVD obtained by using the location lookup table are greatly reduced in comparison with the coding costs of the MVD obtained by using the record 1 or the record 2. Therefore, in most cases, when MV prediction is performed on a repeated picture block or character in the current video frame, the location lookup table is used for prediction. This improves MV coding efficiency.

In an embodiment 2, when coding costs corresponding to all candidates (including the two MVP candidates and the n candidate locations) in Table 3 are determined, rate-distortion costs corresponding to each candidate may be calculated according to the foregoing formula (1), a candidate with lowest rate-distortion costs is selected, and the MV of the current block is predicted based on the optimal candidate.

S701: Obtain the index of the optimal candidate location.

S702: Obtain an MVP of the current block based on the index of the optimal candidate location.

S703: Obtain the MV of the current block based on the MVP of the current block.

In the foregoing process of S701 to S703, the descriptions are separately provided from the encoder side and the decoder side.

Encoder side

The encoder side may select a candidate with lowest coding costs, for example, a candidate location in the location lookup table, by comparing coding costs corresponding to different candidates in Table 3 (the coding costs may be determined in the embodiment 1 or the embodiment 2 or in another manner, and this is not limited herein), and predict the MV of the current block based on the candidate. In this case, the encoder side may obtain the index of the MVP candidate in Table 3, that is, mvp_idx=2 herein, and obtain a value of the index pos_idx (for example, pos_idx=1) corresponding to the optimal candidate location.

In addition, the encoder side may further obtain, from Table 3, coordinates Pos1 of a candidate location corresponding to a case in which mvp_idx=2 and pos_idx=1.

In addition, the encoder side may obtain coordinates (mvp_x, mvp_y) of the MVP of the current block based on coordinates (pred_x, pred_y) of the optimal candidate location Pos1 and location coordinates (x, y) of the current block, where mvp_x=pred_x-x, and mvp_y=pred_y-y.

Then, the encoder side performs motion search in the neighborhood centered on the MVP (the coordinates are (mvp_x, mvp_y)) to obtain the actual motion vector MV of the current block, and obtains MVD=MV-MVP through calculation.

In this case, coding information that is of the MV of the current block and that is sent by the encoder side to the decoder side may include mvp_idx, pos_idx, and the MVD obtained through calculation, to encode the MV of the current block.

Herein, if mvp_idx is 2, mvp_idx may be used as a specified identifier to indicate that the current block includes text content, and the decoder side may decode the coding information of the current block based on the location lookup table.

In the foregoing process, if mvp_idx corresponding to the candidate with the lowest coding costs determined in Table 3 is 0 or 1, the encoder side may use the original MVP 0 or MVP 1 in the AMVP candidate list to perform MV prediction.

In this way, a value of the index mvp_idx of the MVP candidate can be used to indicate that the current block is not encoded by using the location lookup table. If mvp_idx corresponding to the candidate with the lowest coding costs is 2, the encoder side uses the location lookup table to perform MV prediction of the current block, where truncated unary coding is used for mvp_idx, and a largest symbol is modified from 1 to 2. In addition, if mvp_idx=2, the index pos_idx of the optimal candidate location (that is, a candidate location used for encoding the current block this time) in the location lookup table is additionally transmitted in the coding information of the MV, where truncated binary coding (TBC) may be used for pos_idx, and a largest symbol is a current length of the location lookup table.

Decoder side

The decoder side also extends the length of the AMVP candidate list in S700, and writes the location lookup table (for a specific generation manner, refer to the related descriptions in the example 1 or the example 2) into the AMVP candidate list as a new mode, to also obtain Table 3.

The decoder side may receive the bitstream of the encoder side, and parse the bitstream to obtain the coding information of the MV of the current block. For example, the coding information may include mvp_idx, pos_idx, and the MVD. For example, when decoding the bitstream, the decoder side may first parse mvp_idx. If mvp_idx is 2, the decoder side may determine that the current block is encoded by using the location lookup table, for example, determine that the current block includes the text content. In this case, the decoder side needs to use the location lookup table to decode the current block. The decoder side may extend the length of the AMVP candidate list of the current block in S700, and write the location lookup table into the AMVP candidate list, to obtain Table 3. In addition, the decoder side further parses the index pos_idx of the candidate location in the bitstream.

Then, the decoder side may obtain coordinates of the optimal candidate location (for example, coordinates (pred_x, pred_y) of Pos1) from the location lookup table based on values of mvp_idx and pos_idx in Table 3 maintained by the decoder side, and convert the coordinates of the optimal candidate location into the MVP (mvp_x, mvp_y) of the current block based on the location coordinates (x, y) of the current block, where mvp_x=pred_x-x, and mvp_y=pred_y-y.

Then, the decoder side may further parse the bitstream to obtain the MVD of the current block, and decode the MVD to obtain MV=MVD+MVP of the current block, so as to decode the MV of the current block.

With reference to the example 1 or the example 2, in the example 3, in this application, another location prediction manner different from original neighborhood MV prediction is provided by establishing a location lookup table. In this application, complexity of using the location lookup table may be reduced by limiting the length of the location lookup table. In addition, in a scenario in which a repeated picture block or character block in the current video frame is encoded or decoded, a location lookup table is used to perform MV prediction on the current block, and the encoder side may compare more MVP candidates, so that complexity of MV prediction can be reduced, the MVD is smaller, and coding bit costs of the index pos_idx of the candidate location are lower. Compared with the conventional technology, in this application, a quantity of bits for coding the MV can be further reduced, and MV coding efficiency can be improved.

Example 4

A location lookup table is used by converting K candidate locations in the location lookup table into MVPs in a candidate motion vector list, and an MV of a current block is predicted based on an index of an MVP with lowest coding costs in the candidate motion vector list.

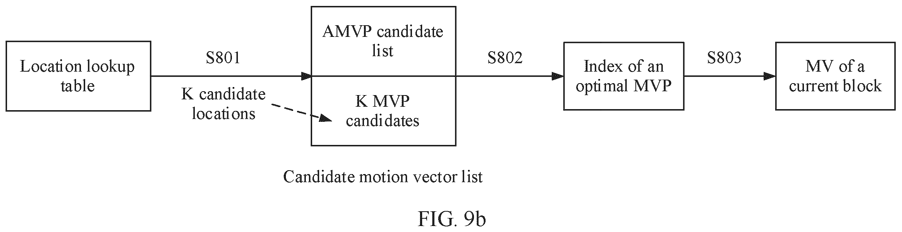

FIG. 9b shows an example of a process in which a coder side performs MV prediction of a current block by using a location lookup table.

The process shown in FIG. 9b may be applied to an encoder side, and may also be applied to a decoder side. The encoder side and the decoder side are collectively referred to as the coder side. As shown in FIG. 9b, the process may include the following steps.

S801: The coder side generates a candidate motion vector list based on a location lookup table.

The coder side may select K candidate locations from the location lookup table in a predetermined order (for example, from front to back or from back to front, where an order selection policy is not limited herein). The coder side may convert coordinates of the K candidate locations into K MVP candidates based on location coordinates (x, y) of a current block (also referred to as a current coding block). Then, the coder side may add the K MVP candidates to the candidate motion vector list that is an AMVP candidate list herein.

In this way, the candidate motion vector list not only includes MVP candidates (for example, the MVP 0 and the MVP 1 in Table 3) in the AMVP candidate list, but also may include the K MVP candidates obtained by converting the K candidate locations. Herein, MV prediction on the current block is implemented in an AMVP mode.

In another embodiment, the K MVP candidates may alternatively be added to a merge candidate list. In this case, MV prediction on the current block is implemented in a merge mode.

S802: The coder side determines an index of an optimal MVP based on the candidate motion vector list.

S803: The coder side obtains an MV of the current block based on the index of the optimal MVP.

For S802 and S803, the encoder side may determine an MVP candidate with lowest coding costs in the candidate motion vector list as the optimal MVP. Herein, an index mvp_idx of the optimal MVP in the candidate motion motor list may be determined.

When determining the MVP candidate with the lowest coding costs, the encoder side may determine an MVP candidate with lowest rate-distortion costs in the candidate motion vector list according to foregoing formula (1) as the optimal MVP. A specific solution for determining the MVP candidate with the lowest coding costs is not limited herein.

The encoder side may perform motion search in a neighborhood centered on the optimal MVP to obtain an actual motion vector MV of the current block, and determine MVD=MV-MVP (the optimal MVP herein).

Coding information that is of the MV of the current block and that is sent by the encoder side to the decoder side may include mvp_idx (the index of the optimal MVP), the MVD obtained through calculation, and a value of K, to encode the MV of the current block.

When the encoder side predicts the MV in the merge mode, the optimal MVP may be used as the MV, coding information sent by the encoder side to the decoder side does not need to carry the MVD, and the coding information may include mvp_idx (the index of the optimal MVP) and a value of K, to encode the MV of the current block.

For S802 and S803, the decoder side may receive a bitstream of the encoder side, and parse the bitstream to obtain the coding information of the current block. For example, the coding information may include mvp_idx (the index of the optimal MVP), the MVD obtained through calculation, and the value of K.

The decoder side may select K candidate locations from a location lookup table (a specific generation process may be a manner in the example 1 or the example 2, and this is not limited herein) of the decoder side in a predetermined order based on the value of K obtained by parsing the bitstream, and convert the K candidate locations into K MVP candidates based on location coordinates of the current block.

Then, when the bitstream is encoded in the AMVP mode, the decoder side may add the K MVP candidates to an AMVP candidate list of the decoder side, to construct a candidate motion vector list of the current block.

In another embodiment, when the bitstream is encoded in the merge mode, the decoder side may add the K MVP candidates to a merge candidate list of the decoder side, to construct a candidate motion vector list of the current block.

Then, the decoder side may obtain, from the candidate motion vector list based on the index mvp_idx of the optimal MVP obtained by parsing the bitstream, an MVP candidate to which the index mvp_idx points as an MVP of the current block.

Finally, when the bitstream is encoded in the AMVP mode, the decoder side may parse the bitstream to obtain an MVD of the current block, and add the MVD of the current block to the MVP of the current block to obtain the MV of the current block, so as to decode the MV of the current block.

Alternatively, in another embodiment, when the bitstream is encoded in the merge mode, the decoder side may use the MVP of the current block as the MV of the current block, to decode the MV of the current block.

As shown in FIG. 8, after S602, S603: Code the current block based on the motion information of the current block.

The coder side may copy a reconstructed pixel in the current video frame as a prediction block based on the obtained motion information (for example, the MV) of the current block. For a specific process, refer to the description about the reconstructed video picture. This is not limited herein.

In video coding, an MV represents a relative motion of an object. In a natural scenario, a motion vector of a moving object has high consistency. Therefore, accuracy of predicting an MV of a to-be-coded block based on an MV of a coded block is high, and a quantity of bits for coding the MV can be effectively reduced.

It should be understood that similar content in the foregoing implementations is not described one by one in the implementations, and reference may be made to each other. In addition, the foregoing implementations may be combined with each other to form a new embodiment. Details are not described herein again.

According to a same inventive concept as that of the method, an embodiment of the present invention further provides a video processing apparatus. The video processing apparatus includes a first obtaining module, configured to obtain a lookup table of a current block in a current video frame, where the lookup table includes at least one candidate location, the candidate location is a location that is in the current video frame and that is relative to a sample at an upper left corner of the current video frame; a second obtaining module, configured to obtain motion information of the current block based on the lookup table; and a coding module, configured to code the current block based on the motion information.

It should be noted that the first obtaining module, the second obtaining module, and the coding module may be used in a video encoding or decoding process on an encoder side or a decoder side. Specifically, on the encoder side, these modules may be used in the encoder 20; and on the decoder side, these modules may be used in the decoder 30.

It should be further noted that, for specific content of the first obtaining module, the second obtaining module, and the coding module, refer to the foregoing description of the content including the summary. For brevity of the present invention, details are not described in this specification.

In an embodiment, the first obtaining module, the second obtaining module, and the coding module may be implemented by hardware, software, or any combination thereof.

The following describes applications of the encoding method and the decoding method shown in the foregoing embodiments and the system using these methods.

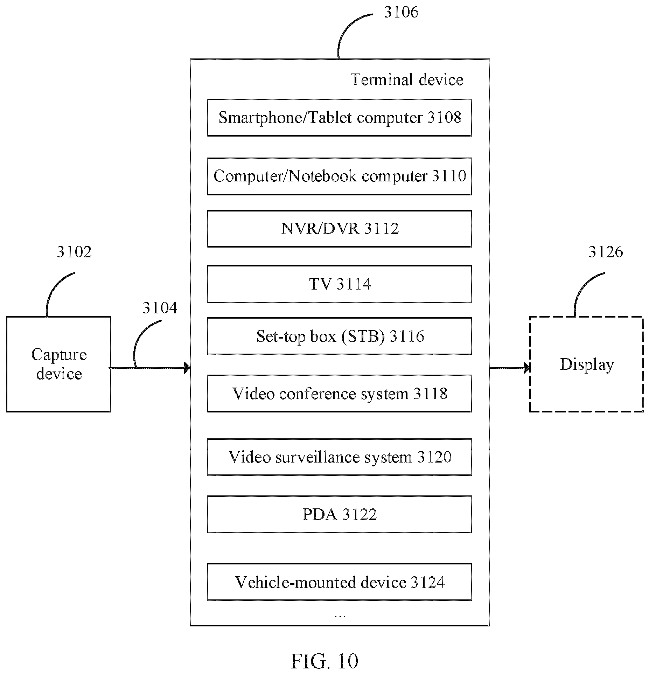

FIG. 10 is a block diagram of a content supply system 3100 for implementing a content delivery service. The content supply system 3100 includes a capture device 3102 and a terminal device 3106, and optionally includes a display 3126. The capture device 3102 communicates with the terminal device 3106 through a communication link 3104. The communication link may include the foregoing link 13. The communication link 3104 includes but is not limited to Wi-Fi, an ethernet, a cable, wireless (3G/4G/5G), a USB, or any combination thereof.

The capture device 3102 generates data, and may encode the data according to the encoding method shown in the foregoing embodiments. Alternatively, the capture device 3102 may distribute the data to a stream server (not shown in the figure), and the server encodes the data and sends encoded data to the terminal device 3106. The capture device 3102 includes but is not limited to a camera, a smartphone or tablet computer, a computer or notebook computer, a video conference system, a PDA, a vehicle-mounted device, or any combination thereof. For example, the capture device 3102 may include the foregoing source device 12. When the data includes a video, the video encoder 20 included in the capture device 3102 may actually perform video encoding processing. When the data includes audio (that is, voice), an audio encoder included in the capture device 3102 may actually perform audio encoding processing. For some practical scenarios, the capture device 3102 multiplexes encoded video and audio data together for distribution. In another practical scenario, for example, in a video conference system, encoded audio data and encoded video data are not multiplexed. The capture device 3102 separately distributes the encoded audio data and the encoded video data to the terminal device 3106.

In the content supply system 3100, the terminal device 3106 receives and reproduces the encoded data. The terminal device 3106 may be a device having a data receiving and recovering capability, for example, a smartphone or tablet computer 3108, a computer or notebook computer 3110, a network video recorder (network video recorder, NVR)/digital video recorder (digital video recorder, DVR) 3112, a TV 3114, a set-top box (set top box, STB) 3116, a video conference system 3118, a video surveillance system 3120, a personal digital assistant (personal digital assistant, PDA) 3122, a vehicle-mounted device 3124, or any combination thereof, or a device that can decode the encoded data. For example, the terminal device 3106 may include the foregoing destination device 14. When the encoded data includes a video, the video decoder 30 included in the terminal device preferentially performs video decoding. When the encoded data includes audio, an audio decoder included in the terminal device preferentially performs audio decoding processing.

For a terminal device with a display, for example, the smartphone or tablet computer 3108, the computer or notebook computer 3110, the network video recorder (network video recorder, NVR)/digital video recorder (digital video recorder, DVR) 3112, the TV 3114, the personal digital assistant (personal digital assistant, PDA) 3122, or the vehicle-mounted device 3124; and the terminal device may feed decoded data to the display of the terminal device. For a terminal device without a display (for example, the STB 3116, the video conference system 3118, or the video surveillance system 3120), the external display 3126 is connected to receive and display decoded data.

When each device in the system performs encoding or decoding, the picture encoding device or picture decoding device shown in the foregoing embodiments may be used.

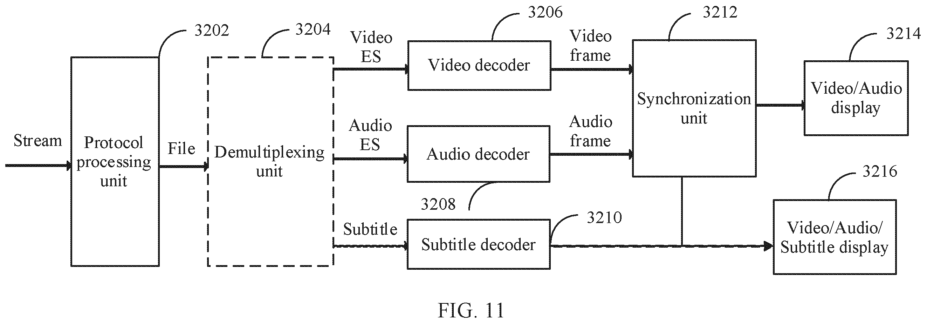

FIG. 11 is a diagram of an example structure of the terminal device 3106. After the terminal device 3106 receives a stream from the capture device 3102, a protocol processing unit (protocol proceeding unit) 3202 analyzes a transport protocol of the stream. The protocol includes but is not limited to a real-time streaming protocol (Real Time Streaming Protocol, RTSP), a hypertext transfer protocol (Hyper Text Transfer Protocol, HTTP), an HTTP live streaming protocol (HTTP Live streaming protocol, HLS), MPEG-DASH, a real-time transport protocol (Real-time Transport protocol, RTP), a real-time messaging protocol (Real Time Messaging Protocol, RTMP), or any combination thereof.

After processing the stream, the protocol processing unit 3202 generates a stream file. The file is output to a demultiplexing unit 3204. The demultiplexing unit 3204 may separate the multiplexed data into the encoded audio data and the encoded video data. As described above, in some actual scenarios, for example, in the video conference system, the encoded audio data and the encoded video data are not multiplexed. In this case, the encoded data is sent to a video decoder 3206 and an audio decoder 3208 without through the demultiplexing unit 3204.

A video elementary stream (elementary stream, ES), an audio ES, and optional subtitles are generated through demultiplexing. The video decoder 3206 includes the video decoder 30 described in the foregoing embodiments, decodes the video ES according to the decoding method shown in the foregoing embodiments to generate a video frame, and feeds such data to a synchronization unit 3212. The audio decoder 3208 decodes the audio ES to generate an audio frame, and feeds such data to the synchronization unit 3212. Alternatively, the video frame may be stored in a buffer (not shown in FIG. 11) before the video frame is fed to the synchronization unit 3212. Similarly, the audio frame may be stored in the buffer (not shown in FIG. 11) before the audio frame is fed to the synchronization unit 3212.

The synchronization unit 3212 synchronizes the video frame and the audio frame, and provides a video/audio to a video display/an audio display 3214. For example, the synchronization unit 3212 synchronizes presentation of video information and audio information. Information may be coded syntactically based on a timestamp related to presentation of coded audio data and video data and a timestamp related to transmission of a data stream.

If subtitles are included in the stream, a subtitle decoder 3210 decodes the subtitles, synchronizes the subtitles with the video frame and the audio frame, and provides the video/audio/subtitles to a video display/an audio display/a subtitle display 3216.

The present invention is not limited to the foregoing system, and the picture encoding device or the picture decoding device in the foregoing embodiments may be combined into another system, for example, an automotive system.

A person skilled in the art may understand that functions described in combination with the illustrative logical blocks, modules, and algorithm steps disclosed and described in this specification may be implemented by hardware, software, firmware, or any combination thereof. If the software is used for implementation, the functions described in combination with the illustrative logical blocks, modules, and steps may be stored in or sent through a computer-readable medium as one or more instructions or code and executed by a hardware-based processing unit. The computer-readable medium may include a computer-readable storage medium and correspond to a tangible medium such as a data storage medium, or include a communication medium (for example, a communication protocol) that facilitates transmission of a computer program from one place to another place. In this manner, the computer-readable medium may usually correspond to a non-transitory tangible computer-readable storage medium (1) or a communication medium (2) such as a signal or carrier. The data storage medium may be any usable medium that may be accessed by one or more computers or one or more processors to search for instructions, code, and/or data structures for implementing the technologies described in this specification. A computer program product may include a computer-readable medium.

By way of example rather than limitation, such computer-readable storage media may include a RAM, a ROM, an EEPROM, a CD-ROM or another optical disc storage apparatus, a magnetic disk storage apparatus, or another magnetic storage apparatus, a flash memory, or any other medium that can be used to store required program code in a form of instructions or data structures and that can be accessed by a computer. In addition, any connection may be referred to as a computer-readable medium. For example, if the instructions are sent from a website, a server, or another remote source through a coaxial cable, an optical fiber cable, a twisted pair, a digital subscriber line (digital subscriber line, DSL), or a wireless technology (for example, infrared, radio, or microwave), a definition of the medium includes the coaxial cable, the optical fiber cable, the twisted pair, the DSL, or the wireless technology (for example, infrared, radio, and microwave). However, it should be understood that the computer-readable storage medium and the data storage medium are actually non-transitory tangible storage media, and do not include connections, carriers, signals, or other transitory media. The magnetic disks and optical discs used in this specification include a compact disc (compact disc, CD), a laser disc, an optical disc, a digital versatile disc (digital versatile disc, DVD), and a Blu-ray disc. The magnetic disks usually reproduce data magnetically, and the optical discs optically reproduce data by using laser light. The foregoing combination shall also be included in the scope of the computer-readable medium.

The instructions may be executed by one or more processors, for example, one or more digital signal processors (digital signal processors, DSPs), general-purpose microprocessors, application-specific integrated circuits (application-specific integrated circuits, ASICs), field-programmable gate arrays (field-programmable gate arrays, FPGAs), or other equivalent integrated or discrete logic circuits. Therefore, the term "processor" used in this specification may refer to any one of the foregoing structures or any other structure suitable for implementing the technologies described in this specification. In addition, in some aspects, the functions described in combination with the illustrative logical blocks, modules, and steps described in this specification may be provided in dedicated hardware and/or software modules configured for encoding and decoding, or may be combined into a combined codec. In addition, these technologies may be completely implemented in one or more circuits or logic elements.

The technologies in the present invention may be implemented in a plurality of apparatuses or devices, including a wireless handheld mobile phone, an integrated circuit (integrated circuit, IC), or a set of ICs (for example, a chipset). Various components, modules, or units are described in this specification to emphasize functional aspects of apparatuses configured to perform the disclosed technologies, but the components, modules, or units are not necessarily implemented by different hardware units. Actually, as described above, various units may be combined into a codec hardware unit in combination with appropriate software and/or firmware, or provided by interoperable hardware units (including one or more processors as described above).

In the foregoing embodiments, the descriptions of the embodiments have different focuses. For a part that is not described in detail in this embodiment, refer to related descriptions in other embodiments.

The foregoing descriptions are merely examples of specific implementations of the present invention, but are not intended to limit the protection scope of the present invention. Any variation or replacement figured out by a person skilled in the art within the technical scope disclosed in this specification shall fall within the protection scope of the present invention. Therefore, the protection scope of the present invention shall be subject to the protection scope of the claims.

**Claims**

1. A video processing method, wherein the method comprises:

   obtaining a lookup table of a current block in a current video frame, wherein the lookup table comprises at least one candidate location, and the candidate location is a location that is in the current video frame and that is relative to a sample at an upper left corner of the current video frame;
   obtaining motion information of the current block based on the lookup table; and
   coding the current block based on the motion information.

2. The method according to claim 1, wherein the current video frame comprises text content.

3. The method according to claim 2, wherein the candidate location comprises a location of a repeatedly appearing block in the current video frame.

4. The method according to any one of claims 1 to 3, wherein the candidate location comprises a location of a coded block in the current video frame and/or a location of a reference block of the coded block.

5. The method according to any one of claims 1 to 4, wherein the candidate location comprises a location at which the repeatedly appearing block in the current video frame appears for the first time.

6. The method according to any one of claims 1 to 5, wherein the obtaining a lookup table of a current block in a current video frame comprises:

   selecting, based on motion information of at least one coded block in the current video frame from a location corresponding to the at least one coded block, a candidate location that is to be added to the lookup table, to update the lookup table, wherein
   the location corresponding to the at least one coded block comprises a location of the coded block in the current video frame or a location of a reference block of the coded block in the current video frame; and
   obtaining an updated lookup table.

7. The method according to any one of claims 1 to 5, wherein the obtaining a lookup table of a current block in a current video frame comprises:

   obtaining a global lookup table of at least one region in the current video frame, wherein the at least one region comprises a first region, the first region comprises the current block, the global lookup table comprises at least one first location, and the at least one first location is a location that is in the region and that is relative to the sample at the upper left corner of the current video frame; and
   obtaining the lookup table of the current block in the current video frame based on the global lookup table of the at least one region, wherein the first location comprises the candidate location in the lookup table.

8. The method according to claim 7, wherein a global lookup table of each of the at least one region is a lookup table generated based on a frequency of repeated appearing of a block in the region before the block in the region is coded.

9. The method according to any one of claims 1 to 8, wherein the obtaining motion information of the current block based on the lookup table comprises:

   determining at least one target candidate location based on the lookup table, wherein the candidate location in the lookup table comprises the target candidate location;
   determining at least one motion vector predictor MVP of the current block based on the at least one target candidate location; and
   obtaining the motion information of the current block based on the at least one MVP.

10. The method according to claim 9, wherein there is one target candidate location, and the determining at least one target candidate location based on the lookup table comprises:
   determining, based on the lookup table and an index of the candidate location, the target candidate location that is in the lookup table and that corresponds to the index.

11. The method according to claim 9, wherein the determining at least one target candidate location based on the lookup table comprises:
selecting a predetermined quantity of candidate locations from the lookup table as target candidate locations, wherein the predetermined quantity is an integer greater than zero.

12. The method according to claim 11, wherein the obtaining the motion information of the current block based on the at least one MVP comprises:

    constructing an MVP candidate list of the current block based on the at least one MVP; and
    obtaining the motion information of the current block based on the MVP candidate list.

13. The method according to claim 11 or 12, wherein the predetermined quantity is related to at least one of the following: a coding mode of the motion information of the current block, a size of the current block, and a shape of the current block.

14. A video processing apparatus, wherein the video processing apparatus comprises:

    a first obtaining module, configured to obtain a lookup table of a current block in a current video frame, wherein the lookup table comprises at least one candidate location, and the candidate location is a location that is in the current video frame and that is relative to a sample at an upper left corner of the current video frame;
    a second obtaining module, configured to obtain motion information of the current block based on the lookup table; and
    a coding module, configured to code the current block based on the motion information.

15. An encoder, configured to perform the method according to any one of claims 1 to 13.

16. The encoder according to claim 15, wherein the encoder is further configured to encode the global lookup table into a bitstream of the current video frame.

17. The encoder according to claim 15 or 16, wherein the encoder is further configured to encode an index of the target candidate location in the lookup table into the bitstream of the current video frame.

18. The encoder according to claim 15 or 16, wherein the encoder is further configured to encode the predetermined quantity into the bitstream of the current video frame.

19. A decoder, configured to perform the method according to any one of claims 1 to 13.

20. The decoder according to claim 19, wherein the decoder is further configured to obtain a global lookup table of at least one region in a current video frame from a bitstream.

21. The decoder according to claim 19 or 20, wherein the encoder is further configured to obtain an index of the target candidate location in the bitstream.

22. The decoder according to claim 19 or 20, wherein the decoder is further configured to obtain the predetermined quantity in the bitstream.

23. A computer-readable storage medium, comprising a computer program, wherein when the computer program is run on a computer or a processor, the computer or the processor is enabled to perform the method according to any one of claims 1 to 13.

24. A video processing apparatus, comprising one or more interface circuits and one or more processors, wherein the interface circuit is configured to: receive a signal from a memory, and send the signal to the processor, wherein the signal comprises computer instructions stored in the memory; and when the processor executes the computer instructions, the processor is configured to perform the method according to any one of claims 1 to 13.

25. A computer program product, wherein the computer program product comprises a software program, and when the software program is executed by a computer or a processor, steps of the method according to any one of claims 1 to 13 are performed.

26. A computer-readable storage medium, wherein the computer-readable storage medium stores a video bitstream obtained by performing the method according to any one of claims 1 to 13 by one or more processors.

27. A video data encoder, wherein the encoder comprises a memory configured to store the video data in a form of a bitstream, and the encoder is configured to perform the method according to any one of claims 1 to 13.

28. A video data decoder, wherein the decoder comprises a memory configured to store the video data in a form of a bitstream, and the decoder is configured to perform the method according to any one of claims 1 to 13.

FIG. 1A

| Imaging device 41 | | Antenna 42 |
|---|---|---|

Processing unit 46

Logic circuit 47

| Encoder 20 | Decoder 30 |
|---|---|

Processor 43

Memory 44

Display device 45

Video coding system 40

FIG. 1B

FIG. 2

FIG. 3

400

Video coding device

410

430

450

Processor

420

Encoding/
Decoding module

440

Receiver

470

Transmitter

460

Memory

Downlink port

Uplink port

FIG. 4

500

510

570

Processor

Display

550

Data — 531

Application 1, ...
Application: video decoding          535
Application N

Operating system — 533

530

FIG. 5

FIG. 6

FIG. 7

S601 — Obtain a location lookup table of a current block in a video frame

S602 — Obtain motion information of the current block based on the location lookup table

S603 — Code the current block based on the motion information of the current block

FIG. 8

Table 3

| AMVP candidate list |
|---|
| Location lookup table |

S700 →

S701 → Index of an optimal candidate location

S702 → MVP of a current block

S703 → MV of the current block

FIG. 9a

```
┌──────────────┐          ┌──────────────────┐          ┌──────────────┐          ┌──────────────┐
│              │   S801   │  AMVP candidate  │   S802   │  Index of an │   S803   │   MV of a    │
│Location lookup│ ───────▶ │      list        │ ───────▶ │ optimal MVP  │ ───────▶ │ current block│
│    table     │          │                  │          │              │          │              │
│              │ K candidate│    K MVP        │          └──────────────┘          └──────────────┘
└──────────────┘ locations │  candidates     │
                 ╲ ─ ─ ▶   └──────────────────┘
```

Candidate motion vector list

FIG. 9b

3106

**Terminal device**

Smartphone/Tablet computer 3108

Computer/Notebook computer 3110

NVR/DVR 3112

TV 3114

Set-top box (STB) 3116

Video conference system 3118

Video surveillance system 3120

PDA 3122

Vehicle-mounted device 3124

...

3102

3104

Capture device

3126

Display

FIG. 10

FIG. 11

## INTERNATIONAL SEARCH REPORT

| International application No. |
| --- |
| **PCT/CN2023/095686** |

| A. | CLASSIFICATION OF SUBJECT MATTER |
| --- | --- |

H04N 19/105(2014.01)i;  H04N 19/139(2014.01)i;  H04N 19/176(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT, WPABSC, ENTXT: 块复制, 块拷贝, 屏幕内容编码, 文字, 字符, 拷贝, 复制, 重复, 相同, 同样, 位置, 坐标, 距离, 候选, 参考, 查找表, 列表, 集合, 运动矢量, 运动向量, block copy, IBC, SCC, character, word, copy, repeat, same, identical, position, location, distance, candidate, reference, LUT, list, table, set, BV, MV, AMVP, MVP

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105359531 A (MICROSOFT TECHNOLOGY LICENSING, LLC) 24 February 2016 (2016-02-24)<br>    description, paragraphs [0038], [0040]-[0051], [0053], [0069], [0131], [0144] and [0148]-[0179] | 1-8, 14-16,<br>19-20, 23-28 |
| A | CN 115088192 A (BYTEDANCE LTD.) 20 September 2022 (2022-09-20)<br>    entire document | 1-28 |
| A | CN 113796071 A (HUAWEI TECHNOLOGIES CO., LTD.) 14 December 2021 (2021-12-14)<br>    entire document | 1-28 |
| A | WO 2021244656 A1 (BEIJING BYTEDANCE NETWORK TECHNOLOGY CO., LTD.) 09 December 2021 (2021-12-09)<br>    entire document | 1-28 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 August 2023** | **23 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/095686**

| Patent document cited in search report | | | Publication date (day/month/year) | Patent family member(s) | | | Publication date (day/month/year) |
|---|---|---|---|---|---|---|---|
| CN | 105359531 | A | 24 February 2016 | US | 2016269732 | A1 | 15 September 2016 |
| | | | | US | 10136140 | B2 | 20 November 2018 |
| | | | | WO | 2015139165 | A1 | 24 September 2015 |
| | | | | EP | 3120556 | A1 | 25 January 2017 |
| | | | | EP | 3120556 | A4 | 13 January 2021 |
| CN | 115088192 | A | 20 September 2022 | WO | 2021108788 | A1 | 03 June 2021 |
| | | | | US | 2022286672 | A1 | 08 September 2022 |
| | | | | WO | 2021108787 | A1 | 03 June 2021 |
| CN | 113796071 | A | 14 December 2021 | US | 2022030223 | A1 | 27 January 2022 |
| | | | | CA | 3136498 | A1 | 03 December 2020 |
| | | | | WO | 2020238706 | A1 | 03 December 2020 |
| | | | | WO | 2020238706 | A9 | 23 September 2021 |
| | | | | EP | 3942800 | A1 | 26 January 2022 |
| | | | | EP | 3942800 | A4 | 01 June 2022 |
| | | | | MX | 2021014298 | A | 04 January 2022 |
| | | | | JP | 2022534235 | A | 28 July 2022 |
| | | | | KR | 20210141712 | A | 23 November 2021 |
| | | | | AU | 2020282086 | A1 | 04 November 2021 |
| WO | 2021244656 | A1 | 09 December 2021 | US | 2023097850 | A1 | 30 March 2023 |

Form PCT/ISA/210 (patent family annex) (July 2022)

**REFERENCES CITED IN THE DESCRIPTION**

**Patent documents cited in the description**

- CN 202211517674X